# EUROPEAN PATENT APPLICATION

(11) **EP 1 810 822 A1**
(43) Date of publication of application: **25.07.2007**
(21) Application number: 05806063.3
(22) Date of filing: 10.11.2005
(51) Int. Cl.: B32B 27/30, B32B 27/36, B65D 65/40, G09F 3/04

(54) **HEAT SHRINKABLE LAMINATED FILM, MOLDED ARTICLE USING SUCH FILM, AND HEAT SHRINKABLE LABEL AND CONTAINER**

(30) Priority: 10.11.2004 JP 2004326965; 10.11.2004 JP 2004326966
(71) Applicant: MITSUBISHI PLASTICS, INC., Chiyoda-ku, Tokyo 100-0005 (JP)
(72) Inventor: YAMADA, Takeyoshi c/o MITSUBISHIPLASTICS, INC., Shiga 5268660 (JP); TANAKA, Yukihiro c/o MITSUBISHI PLASTICS, INC., Shiga 5268660 (JP); HIRUMA, Takashi c/o MITSUBISHI PLASTICS, INC., Shiga 5268660 (JP); MIYASHITA, You c/o MITSUBISHI PLASTICS, INC., Shiga 5268660 (JP); TAKAGI, Jun c/o MITSUBISHI PLASTICS, INC., Shiga 5268660 (JP)
(74) Representative: Hatt, Anna Louise
(86) International application number: PCT/JP2005/020653
(87) International publication number: WO 2006/051884

(57) **Abstract**

The present invention provides a heat-shrinkable laminated film, which exhibits excellent film rigidity, shrink finishing quality, transparency of the recycled film, and a small natural shrinkage, with suppressed film interlayer peeling and shrinking stress, and which is applicable to shrinkable packing, shrinkable bond-packing, shrinkable label and the like.

The heat-shrinkable laminated film comprises: a surface layer (S layer) composed of a polyester series resin composition containing a polyvalent carboxylic acid residue and a polyvalent alcohol residue; a middle layer (M layer) composed of a styrene series resin composition; and an adhesive layer (AD layer) which contains a copolymer of styrene series hydrocarbon and a conjugated dienic hydrocarbon or hydrogenated derivatives thereof, and having a styrene series hydrocarbon content rate to the entire copolymer or hydrogenated derivatives is 5~40 mass % or less. An elongation modulus of the film in a direction perpendicular to a main shrinking direction of the film is 1200MPa or more, and a shrinking stress in the main shrinking direction of the film is 8MPa or less or a rupture elongation at 23°C is 40% or more.

## Description

### Technical Field

The present invention relates to a heat-shrinkable laminated film, a molded product and a heat-shrinkable label employing the film, and a container. More particularly, the present invention related to a heat-shrinkable laminated film, which exhibits excellent shrink finishing quality, film rigidity (stiffness at room temperature), transparency at a time of addition as a reclamation material, and a small natural shrinkage and reduction of mechanical strength over time, with suppressed film interlayer peeling and shrinking stress, and which is applicable to shrinkable packing, shrinkable bond-packing, shrinkable label and the like, and a molded product and a heat-shrinkable label employing the film, and a container.

### Background Art

These days, soft drinks such as juice are sold in a form that the drink is filled in containers such as glass bottles or PET (polyethylene terephthalate) bottles. When the drinks are on sale, in order to differentiate the goods from other goods and to improve its visibility, a heat-shrinkable label on which printing is given is provided onto the outside of each container. In addition, recently, demand of such bottles with heat-shrinkable label thereon is increasing; a heat-shrinkable label, which exhibits advanced shrink finishing quality in a relatively short period at low temperature and small natural shrinkage (it is the circumstance where a film shrinks before its original use at slightly higher temperature than room temperature, e.g. in summer.), is required. Nowadays, as a material for this heat-shrinkable label, polystyrene, polyester, polyvinyl chloride, polyolefin, and the like are generally used.

Among the above materials, polyvinyl chloride series heat-shrinkable film has problems such as lack of heat resistance and emission of hazardous gas like hydrogen chloride when it is burnt after its use. Whereas, polystyrene series heat-shrinkable film which mainly contains styrene-butadiene copolymer is proposed and used. This polystyrene series heat-shrinkable film exhibits excellent shrink finishing quality compared with polyvinyl chloride series heat-shrinkable film. However, the polystyrene series heat-shrinkable film also exhibits large natural shrinkage and low film rigidity (i.e. stiffness at room temperature), this film causes problems such as fitting defect due to the label bending during the label fitting process. On the other hand, the polyester series heat-shrinkable film exhibits positive features such as small natural shrinkage and high film rigidity. However, the shrink finishing quality of polyester series heat-shrinkable film is not as good as that of polyvinyl chloride series film (in other words, when the film is fitted as a label onto a container, by heat shrinkage, spots and wrinkles can be easily occurred.), and this film causes problems such as significant drop of its mechanical strength over time. Among the problems, embrittlement of the film over time tends to be caused when the film is stored for long term under an atmosphere of relatively high temperature, particularly at 30°C or more. Such film embrittlement becomes a cause of breakage during film processing, therefore the improvement for preventing film embrittlement is also required.

In order to solve the above problems, Patent Document 1 proposes a method to improve shrink finishing quality of the heat-shrinkable film with use of a resin produced by mixing modified polybutylene terephthalate resin obtained by copolymerizing predetermined amount of aromatic dicarboxylic acid other than terephthalic acid and modified polyester resin at predetermined ratio. Also, Patent Document 2 proposes a method to improve shrink finishing quality of the heat-shrinkable film with use of copolymer polyester resin which is obtained by modifying the polyvalent alcohol components, particularly 1,4-cyclohexane dimethanol, 1,4-buthanediol, and polytetramethylene etherglycol. However, since shrinking stress of these heat-shrinkable films is not sufficiently reduced, the shrink finishing quality of both films is not as good as that of styrene series heat-shrinkable film. Moreover, as shrinking stress is not sufficiently reduced, crystalline of the film is increased, or glass transition temperature (hereinafter, it may be described as "Tg".) is lowered. Therefore, the above films have a problem that reduction of the mechanical strength thereof over time becomes remarkable.

As a means to strike a balance between improvement of shrink finishing quality and prevention of reduction of mechanical strength over time, a shrinkable label is shown that consists of surface and backside layers obtained by polyester series resin containing 1,4-cyclohexane dimethanol as diol component, laminated on both sides of a middle layer which is obtained by polystyrene series resin showing good shrink finishing quality and less embrittlement over time (refer to Patent Document 3.). Nevertheless, this shrinkable label has a problem in insufficient interlayer adhesion, thus, in secondary fabrication, interlayer peeling can be easily caused at a time of printing.

While, as an art with improved the above interlayer adhesion, Patent Document 4 reports a film using: a block copolymer of vinyl aromatic hydrocarbon and a conjugated dien derivatives for an inner layer; a polyester series copolymer for both sides of outer layers; and an ethylene-vinyl acetate copolymer, an ethylene-unsaturated carboxylic acid copolymer and the like for an adhesive layer. However, this film has a lack of compatibility between the block copolymer of vinyl aromatic hydrocarbon and the conjugated dien derivatives for inner layer and an ethylene-vinyl acetate copolymer for the adhesive layer. When recycled resin obtained by trimming loss like heels of films and the like is added (hereinafter, refer to "addition of a reclamation material"), there is a problem that transparency of the entire film tends to become poor.
Patent Document 1: Japanese Patent Application Laid-Open (JP-A) No. 2003-12833
Patent Document 2: JP-A No. 2002-212405
Patent Document 3: JP-A No. 2002-351332
Patent Document 4: Japanese Patent Publication of Examined Application No. 5-33896

### Disclosure of the Invention

### Problems to be solved by the Invention

Accordingly, an object of the present invention is to provide a heat-shrinkable laminated film, which exhibits excellent shrink finishing quality, film rigidity (stiffness at room temperature), transparency at a time of addition of a reclamation material, and a small natural shrinkage and reduction of mechanical strength over time, with suppressed film interlayer peeling and shrinking stress, and which is applicable to shrinkable packing, shrinkable bond-packing, shrinkable label and the like.

Another object of the present invention is to provide a molded product and a heat-shrinkable label employing the above film which is applicable to shrinkable packing, shrinkable bond-packing, shrinkable label and the like, and a container with which the above molded product or the heat-shrinkable label is fitted.

### Means for Solving the Problems

The inventors have been conducted serious studies on individual compositions of a surface layer, an adhesive layer, and a middle layer constituting the laminated film. As a result, the inventors have acquired an idea of a film which is capable to solve the above problems, and completed the present invention. In other words, an object of the invention is achieved by providing the following heat-shrinkable laminated film, molded product and heat-shrinkable label employing the above film, and container with which the above molded product or heat-shrinkable label is fitted.

(1) A heat-shrinkable laminated film comprising: a surface layer (S layer) ; a middle layer (M layer) ; and an adhesive layer (AD layer), wherein the respective layers are resin compositions mainly containing following components; an elongation modulus of the heat-shrinkable laminated film in a direction perpendicular to a film's main shrinking direction measured in accordance with JIS K7127 is 1200MPa or more; and maximum shrinking stress in the main shrinking direction of the heat-shrinkable laminated film being dipped in 90°C silicone oil for 10 seconds is 8MPa or less.
   A surface layer (S layer) : a polyester series resin composition containing a polyvalent carboxylic acid residue and a polyvalent alcohol residue.
   A middle layer (M layer) : a styrene series resin composition.
   An adhesive layer (AD layer): a resin composition containing a copolymer of styrene series hydrocarbon and a conjugated dienic hydrocarbon or hydrogenated derivatives thereof, and having a styrene series hydrocarbon content rate in the copolymer or hydrogenated derivatives thereof is 5 mass % or more and 40 mass % or less.
(2) A heat-shrinkable laminated film comprising: a surface layer (S layer); a middle layer (M layer) ; and an adhesive layer (AD layer), wherein the respective layers are resin composition mainly containing following components; the heat-shrinkable laminated film is elongated at least twice or more and 7 times or less in one axial direction at 60°C or more and 120°C or less; an elongation modulus of the heat-shrinkable laminated film in a direction perpendicular to a film's main shrinking direction measured in accordance with JIS K7127 is 1200MPa or more; and maximum shrinking stress in the main shrinking direction of the heat-shrinkable laminated film being dipped in 90°C silicone oil for 10 seconds is 8MPa or less (hereinafter, inventions described in the above (1) and (2) may be described as "the first embodiment of the invention".).
   A surface layer (S layer) : a polyester series resin composition containing a polyvalent carboxylic acid residue and a polyvalent alcohol residue.
   A middle layer (M layer) : a styrene series resin composition.
   An adhesive layer (AD layer): a resin composition containing a copolymer of styrene series hydrocarbon and a conjugated dienic hydrocarbon or hydrogenated derivatives thereof, and having a styrene series hydrocarbon content rate in the copolymer or hydrogenated derivatives thereof is 5 mass % or more and 40 mass % or less.
(3) A heat-shrinkable laminated film comprising: a surface layer (S layer); a middle layer (M layer); and an adhesive layer (AD layer), the respective layers are resin compositions mainly containing following components; an elongation modulus of the heat-shrinkable laminated film in a direction perpendicular to a film's main shrinking direction measured in accordance with JIS K7127 is 1200MPa or more; and rupture elongation in the film's main shrinking direction measured at 23°C in accordance with JIS K7127 is 40% or more (hereinafter, it may be described as "the second embodiment of the invention".).
   A surface layer (S layer): a resin composition consisting of an amorphous polyester series resin containing a polyvalent carboxylic acid residue and a polyvalent alcohol residue, and 1 part by mass or more and 40 parts by mass or less of crystalline polyester series resin to 100 parts by mass of the amorphous polyester series resin.
   A middle layer (M layer): a styrene series resin composition.
   An adhesive layer (AD layer) : a resin composition containing a copolymer of styrene series hydrocarbon and a conjugated dienic hydrocarbon or hydrogenated derivatives thereof, and having a styrene series hydrocarbon content rate in the copolymer or hydrogenated derivatives thereof is 5 mass % or more and 40 mass % or less.
(4) A molded product employing the heat-shrinkable laminated film as defined in any one of the above (1) to (3) as a base material.
(5) A heat-shrinkable label employing the heat-shrinkable laminated film as defined in any one of the above (1) to (3) as a base material.
(6) A container provided with the molded product as defined in the above (4) or the heat-shrinkable label as defined in the above (5).

### Effects of the Invention

According to the present invention, a heat-shrinkable laminated film, which exhibits excellent shrink finishing quality, film rigidity (stiffness at room temperature), transparency at a time of addition of a reclamation material, and a small natural shrinkage and reduction of mechanical strength over time, with suppressed film interlayer peeling and shrinking stress, and which is applicable to shrinkable packing, shrinkable bond-packing, shrinkable label and the like, can be provided.

Further, according to the invention, a molded product and a heat-shrinkable label, which has sufficient film rigidity, exhibits excellent shrink finishing quality and transparency at a time of addition of a reclamation material, and a small reduction of mechanical strength over time, and which is applicable to shrinkable packing, shrinkable bond-packing, shrinkable label and the like, can be provided. Moreover, according to the invention, a container to which products can be adhesively fixed with desired shrinking stress at a desired position no matter what kind of shape the fitting product is, and on which a transparent and clear-looking the above molded product or the heat-shrinkable label is fitted without having any troubles such as occurrence of wrinkles, pocks, and insufficient shrinking, is provided. Best Mode for Carrying Out the Invention

A heat-shrinkable laminated film, a molded product, a heat-shrinkable label, and a container of the present invention will be described in detail as follows.

In this description, "mainly containing" means allowing to contain other components without preventing from the effects of resin composing individual layers. The wording is not limiting the particular content ratio. However, it is a component holding 50 mass % or more, preferably 70 mass % or more, furthermore preferably 80 mass % or more of the resin composing each layer or total resin composition. Also, "main shrinking direction" means a direction of larger heat shrinking ratio in film longitudinal direction or crosswise direction (width direction). For example, when the film is fitted onto a bottle, it is a direction equivalent to outer circumferential direction of the bottle. While, "a direction perpendicular to" means a direction perpendicular to the main shrinking direction.

### [a heat-shrinkable laminated film]

A heat-shrinkable laminated film of the present invention (hereinafter, it refers to "film of the invention", unless otherwise specified, it is understood that both of the first embodiment and the second embodiment of the inventions are included.) comprises a surface layer (S layer) mainly containing polyester series resin composition; a middle layer (M layer) consisting of styrene series resin composition so as to have excellent shrink finishing quality and to prevent over-time embrittlement; and an adhesive layer (AD layer) consisting of a copolymer of styrene series hydrocarbon and a conjugated dienic hydrocarbon or hydrogenated derivatives thereof so as to improve interlayer adhesiveness between the surface layer (S layer) and the middle layer (M layer).

### < the surface layer (S layer) >

In the present invention, the surface layer (S layer) is composed by mainly containing polyester series resin composition containing a polyvalent carboxylic acid residue and a polyvalent alcohol residue.

Examples of the polyvalent carboxylic acid residue constituting polyester series resin composition of the surface layer (S layer) include: aromatic dicarboxylic acid residue induced from such as terephthalic acid, isophthalic acid, 2-chloroterephthalic acid, 2,5-dichloroterephthalic acid, 2-methylterephthalic acid, 4,4-stilbenedicarboxylic acid, 4,4-biphenyldicarboxylic acid, orthophthalic acid, 2, 6-naphthalene dicarboxylic acid, 2,7-naphthalene dicarboxylic acid, bisbenzoic acid, bis (p-carboxyphenyl) methane, anthracene dicarboxylic acid, 4,4-diphenylether dicarboxylic acid, 4,4-diphenoxyethane dicarboxylic acid, 5-Na sulfoisophthalic acid, ethylene-bis-p-benzoic acid; aliphatic dicarboxylic acid residue induced from such as adipic acid, sebacic acid, azelaic acid, dodecanedioate, 1,3-cyclohexane dicarboxylic acid, 1,4-cyclohexane dicarboxylic acid. The polyvalent carboxylic acid residue may be constituted by one of these polyvalent carboxylic acid residues alone or in combination with two or more thereof.

Examples of the polyvalent alcohol residue constituting polyester series resin composition of the surface layer (S layer) include glycol residues induced from such as ethylene glycol, diethylene glycol, 1,2-propylene glycol, 1,3-propanediol, 2,2-dimethyl-1,3-propanediol, trans-tetramethyl-1,3-cyclobutanediol, 2,2,4,4-tetramethyl-1,3-cyclobutanediol, 1,4-butanediol, neopentyl glycol, 1,5-pentanediol, 1,6-hexanediol, 1,4-cyclohexane dimethanol, 1,3-cyclohexane dimethanol, decamethylene glycol, cyclohexanediol, p-xylenediol, bisphenol A, tetrabromo bisphenol A, tetrabromo bisphenol A-bis (2-hydroxyethylether). The polyvalent alcohol residue may be constituted by one of these polyvalent alcohol residues alone or in combination with two or more thereof.

In the invention, as the polyester series resin composition constituting the surface layer (S layer), it is preferable to use amorphous polyester series resin as a main component consisting of : at least a kind of residue selected from a group consisting of terephthalic acid residue, isophthalic acid residue, and 1,4-cyclohexane dicarboxylic acid residue as polyvalent carboxylic acid residue; and at least a kind of residue selected from a group consisting of ethylene glycol residue, diethylene glycol residue, 1,4-butanediol residue, 1,4-cyclohexane dimethanol residue, 1,3-cyclohexane dimethanol residue, and polytetramethylene glycol residue as polyvalent alcohol residue. Moreover, at least either of polyvalent carboxylic acid residue or polyvalent alcohol residue preferably consists of two or more residues. By having the above polyvalent carboxylic acid residue and polyvalent alcohol residue constituted by plural residues in this way, it is possible to control the crystalline of the obtained polyester series resin lower, thereby it is capable to suppress crystallization of the surface layer (S layer).

When amorphous polyester resin consists of two or more kinds of residue, a residue whose mass (mole %) is the largest is defined as the first residue, and other residues whose mass are less than the first residue are the second residue and the followers (as it were, the second residue, the third residue, ···). These residues will be described as follows.
In the invention, examples of preferable mixture of polyvalent alcohol residue include a mixture of: ethylene glycol as the first residue; and at least one kind of residue selected from a group consisting of 1,4-butanediol, neopentyl glycol, diethylene glycol, polytetramethylene glycol, and 1,4-cyclohexane dimethanol as the second residue, preferably 1,4-cyclohexane dimethanol.

Further, examples of preferable mixture of polyvalent carboxylic acid residue include a mixture of: terephthalic acid as the first residue; and at least one kind of residue selected from a group consisting of isophthalic acid, 1, 4-cyclohexane dicarboxylic acid, succinic acid and adipic acid, preferably isophthalic acid.

Total content ratio of polyvalent carboxylic acid residue and polyvalent alcohol residue of the above second residue and the followers is, to the sum (200 mole %) of the total amount (100 mole %) of the polyvalent carboxylic acid residue and the total amount (100 mole %) of polyvalent alcohol residue, 10 mole % or more, preferably 15 mole % or more, and 50 mole % or less, preferably 45 mole % or less. When content ratio of the second residue and the followers is 10 mole % or more, it is capable to control crystallization of the obtained polyester lower. When content of the second residue and the followers is 50 mole % or less, it is capable to utilize the advantages of the first residue.

For instance, when the polyvalent carboxylic acid residue is terephthalic acid residue, the first residue of polyvalent alcohol residue is ethylene glycol residue and the second residue of the same is 1, 4-cyclohexane dimethanol residue; content ratio of 1, 4-cyclohexane dimethanol residue as the second residue is, to total (200 mole %) of total content of terephthalic acid (100 mole %) as dicarboxylic acid component and total content of ethylene glycol and 1,4-cyclohexane dimethanol (100 mole %), 10 mole % or more, preferably 15 mole % or more, and 50 mole % or less, preferably 45 mole % or less, furthermore preferably 40 mole % or less. By using ethylene glycol residue and 1,4-cyclohexane dimethanol residue as diol residues within this range, it is capable to control crystallization of obtained polyester lower and to improve rupture-resistance thereof.

In addition, in the previous example, when the first residue of polyvalent carboxylic acid residue is terephthalic acid residue and the second residue of the same is isophthalic acid residue; content ratio of isophthalic acid residue as polyvalent carboxylic acid residue and 1,4-cyclohexane dimethanol residue as polyvalent alcohol residue, to the sum (200 mole %) of the total amount (100 mole %) of terephthalic acid residue and isophthalic acid residue and the total amount (100 mole %) of ethylene glycol residue and 1, 4-cyclohexane dimethanol residue, is in the range of 10 mole % or more, preferably 15 mole % or more, furthermore preferably 25 mole % or more, and 50 mole % or less, preferably 45 mole % or less, furthermore preferably 40 mole % or less.

In the invention, amorphous polyethylene terephthalate resin, particularly having terephthalic acid residue as polyvalent carboxylic acid residue, and having ethylene glycol residue and 1,4-cyclohexane dimethanol residue as polyvalent alcohol residue, is preferably used.

Content ratio of 1, 4-cyclohexane dimethanol residue, in total polyvalent alcohol residue, is in the range of 15 mole % or more, preferably 20 mole % or more, and the upper limit is 50 mole % or less, preferably 40 mole % or less. When content ratio of the above 1, 4-cyclohexane dimethanol residue is 15 mole % or more, decline of printability due to the crystallization is small, and it is capable to suppress over-time embrittlement. While, when content ratio of 1,4-cyclohexane dimethanol residue is 50 mole % or less, it is capable to obtain appropriate viscosity at a time of extrusion melting to obtain moderate film-forming property. There exists two isomers, i.e. cis-type and trans-type, for 1, 4-cyclohexane dimethanol; either of cis-type or trans-type residue can be used.

As commercially available above polyester series resin, "PETG copolyester6763" (produced by Eastman Chemical Company), "SKYGREEN PETG" (produced by SK Chemicals Co., Ltd.), "VYLON" (produced by TOYOBO CO., LTD.), and "HYTREL" (produced by Du Pont) can be the examples.

In the second embodiment of the invention, a resin composition constituting the surface layer (S layer) comprises amorphous polyester series resin containing polyvalent carboxylic acid residue and polyvalent alcohol residue, and 1 part by mass or more and 40 parts by mass or less of crystalline polyester resin to 100 parts by mass of the amorphous polyester series resin.

"Amorphous polyester series resin" in the second embodiment means a polyester resin such that, by using differential scanning calorimeter (DSC), when the resin is heated from -50°C to 300°C at a heating rate of 10°C/min, then it is cooled down to -50°C at a cooling rate of 10°C/min, thereafter it is heated up again to 300°C at a heating rate of 10°C/min, clear melting peak cannot be observed at the second heating. Amorphous polyester resin is contained in the range of 20 mass % or more, preferably 30 mole % or more as copolymer residue, in the sum (200 mole %) of 100 mole % of polyvalent carboxylic acid residue and 100 mass % of polyvalent alcohol residue.

As polyvalent carboxylic acid residue and polyvalent alcohol residue constituting the amorphous polyester resin, examples of residues which is shown in the description of the first embodiment can be suitably used. In the second embodiment, amorphous polyester series resin having at least one kind of residue selected from a group consisting of terephthalic acid residue, isophthalic acid residue, and 1,4-cyclohexane dicarboxylic acid residue as polyvalent carboxylic acid residue, and having at least one kind of residue selected from a group consisting of ethylene glycol residue, diethylene glycol residue, 1,4-butanediol residue, 1,4-cyclohexane dimethanol residue, 1,3-cyclohexane dimethanol residue and polytetramethylene glycol residue as polyvalent alcohol residue, can be preferably used.

In the second embodiment, a resin composition having an amorphous polyethylene terephthalate resin as a main component containing constituent units which consists of terephthalic acid residue as polyvalent carboxylic acid residue, and ethylene glycol residue and 1,4-cyclohexane dimethanol residue as polyvalent alcohol residue, is suitably used. Content ratio of 1,4-cyclohexane dimethanol residue is, in the range of 15 mole % or more, preferably 20 mole % or more in total polyvalent alcohol residue, and the upper limit is 50 mole % or less, preferably 40 mole % or less. When content ratio of the above 1, 4-cyclohexane dimethanol residue is 15 mole % or more, decline of printability due to the crystallization is small, and it is capable to suppress over-time embrittlement. While, when content ratio of 1,4-cyclohexane dimethanol residue is 50 mole % or less, it is capable to obtain appropriate viscosity at a time of extrusion melting to obtain moderate film-forming property.

The crystalline polyester resin used in the second embodiment will be described as follows.
"Crystalline polyester series resin" in the second embodiment means a polyester resin such that, by using differential scanning calorimeter (DSC), when the resin is heated from -50°C to 300°C at a heating rate of 10°C/min, then it is cooled down to -50°C at a cooling rate of 10°C/min, thereafter it is heated up again to 300°C at a heating rate of 10°C/min, clear melting peak can be observed at the second heating. Such crystalline polyester series resin also includes copolymer polyester resin.

Since the above crystalline polyester series resin has a different Tg from that of amorphous polyester resin, by mixing the crystalline polyester series resin in the amorphous polyester series resin at an appropriate content ratio, it is capable to adjust shrinking start temperature and to make heat shrinking behavior relatively gradual. Also, when the crystalline polyester series resin is mixed into the amorphous polyester resin, it is capable to improve mechanical strength of the film in film elongation direction, thereby excellent perforation breakage can be obtained. In other words, a film having the surface layer (S layer) constituted only by amorphous polyester series resin exhibits low solvent resistance and excellent solvent seal property at bag-making process using organic solvent. Whereas, the mechanical strength of the film after printing tends to be declined. Therefore, by containing the crystalline polyester resin in the amorphous polyester resin, it is capable to give adequate crystalline and to improve solvent resistance, and to suppress the decline of mechanical strength of the film after printing.

Further, by containing the crystalline polyester series resin in the amorphous polyester series resin and giving crystalline thereto, it is capable to improve accuracy of thickness of film after elongation. As it were, if the film to be heated is studied at partial areas at the initial phase of elongation process, uneven temperature distribution may sometimes be observed. In such a circumstance, elongation is started from areas having higher temperatures. When the resin to be used is amorphous resin, thinner areas by elongation is further elongated, eventually elongation of the entire film becomes uneven. However, if the film contains crystalline resin, the initially elongated areas became thinner. At the same time, elongation stress became larger due to the oriented crystallization; therefore non-elongated areas become easy to be elongated. As a result, the entire film can be evenly elongated. Thereby it is capable to improve accuracy of film thickness.

Examples of the above crystalline polyester series resin include polyethylene terephthalate resin, polypropylene terephthalate resin, polybutylene terephthalate resin, polyethylene isophthalate resin, polyethylene naphthalate resin, polybutylene naphthalate resin, polyethylene terephthalate-isophthalate copolymer resin, polyethylene-neopentyl terephthalate copolymer resin, polybutylene terephthalate-ether copolymer resin, polybutylene terephthalate-isophthalate copolymer resin, polytrimethylene terephthalate resin. These crystalline polyester resins may be used alone or in combination with two or more thereof.

Among the above, polytrimethylene terephthalate resin, polybutylene terephthalate resin, polyethylene terephthalate-isophthalate copolymer resin, or polyethylene terephthalate-isophthalate copolymer resin are suitably used as crystalline polyester series resin. Particularly, polytrimethylene terephthalate resin and polybutylene terephthalate resin are preferable as these have high crystallinity, it is capable to give crystallinity to the surface layer (S layer) with small amount of addition thereof.

In the second embodiment, the resin composition of the surface layer (S layer) needs to be a resin such that, to 100 parts by mass of the above amorphous polyester series resin, 1 part by mass or more, preferably 5 parts by mass or more, furthermore preferably 10 parts by mass or more, and 40 parts by mass or less, preferably 35 parts by mass or less, furthermore preferably 30 parts by mass or less of crystalline polyester resin is mixed. When the crystalline polyester series resin is 1 part by mass or more, shrinking behavior becomes gradual, which improves the shrink finishing quality of the film and mechanical strength in elongation direction, and which suppresses decline of the film's mechanical strength after printing and further improves accuracy of the film thickness. On the other hand, when crystalline polyester resin is 40 parts by mass or less, printability and solvent seal property are not inhibited, decline of film's mechanical strength over time is not easily caused, and decline of shrinking property is also small. Accordingly, it is capable to easily obtain a film which exhibit excellent shrink finishing quality, thus it is preferable. An satisfactory crystalline of the mixed resin composition can be acquired as follows. By using differential scanning calorimeter (DSC), only the surface layer (S layer) resin composition is heated from -50°C to 300°C at a heating rate of 10°C/min, then it is cooled down to -50°C at a cooling rate of 10°C/min, thereafter it is heated up again to 300°C at a heating rate of 10°C/min. The crystal melting calorie ( 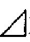 Hm) observed at the second heating is desirably adjusted in the range of 1J/g or more, preferably 3J/g or more, furthermore preferably 5J/g or more, and 30J/g or less, preferably 25J/g or less, furthermore preferably 20J/g or less.

In the invention, weight-average molecular weight of polyester series resin compositions (including amorphous polyester series resin and crystalline polyester series resin) used for the surface layer (S layer) are all 30,000 or more, preferably 35, 000 or more, furthermore preferably 40, 000 or more, and 80,000 or less, preferably 75,000 or less, furthermore preferably 70,000 or less. When the weight-average molecular weight thereof is 30,000 or more, it is capable to inhibit a situation such as shortage of strength and elongation of the film due to the Lack of cohesive force of the resin and embrittlement caused by that. While, when the weight-average molecular weight thereof is 80,000 or less, melting viscosity thereof declines, therefore it becomes suitable for film production and its efficiency.

Intrinsic viscosity (IV) of polyester series resin composition (including amorphous polyester series resin and crystalline polyester series resin) used for the surface layer (S layer) is desirably 0.5dl/g or more, preferably 0.6dl/g or more, furthermore preferably 0. 7dl/g or more, and 1. 5dl/g or less, preferably 1.2dl/g or less, furthermore preferably 1.0dl/g or less. When the intrinsic viscosity (IV) is 0.5dl.g or more, it is capable to suppress decline of the film strength property. While, when the intrinsic viscosity (IV) is 1.5dl/g or less, it is capable to inhibit breakage and the like caused by increase of elongational tension.

### < the middle layer (M layer) >

In the present invention, as a resin for forming middle layer (M layer) of the film, a styrene series resin composition is used. As a styrene series resin composition, copolymer of a styrene series hydrocarbon and a conjugated dienic hydrocarbon is preferably used. Examples of a styrene series hydrocarbon include alkyl styrene such as styrene, (p-, m- or o-methyl styrene), (2, 4-, 2, 5-, 3, 4- or 3, 5-dimethyl styrene), (p-t-butyl styrene) ; halogenated styrene such as (o-, m- or p-chloro styrene), (o-, m- or p-bromo styrene), (o-, m- or p-fluoro styrene), (o-methyl-p-fluoro styrene); halogenated substitutional alkyl styrene such as (o-, m- or p-chloromethyl styrene) ; alkoxy styrene such as (p-, m- or o-methoxy styrene), (o-, m- or p-ethoxy styrene); carboxy alkyl styrene such as (o-, m- or p-carboxy methyl styrene); alkyl ether styrene such as (p-vinylbenzil propylether); alkyl silyl styrene such as (p-tri-methyl silyl styrene); and furthermore, vinylbenzil dimethoxy phosphide. The above styrene series resin may contain two kinds or more of these styrene series hydrocarbon as a monomer component, it also may contain copolymerable monomer other than styrene series hydrocarbon.

Examples of a conjugated dienic hydrocarbon include butadien, isoprene, 2-methyl-1,3-butadien, 2,3-dimethyl-1,3-butadien, 1,3-pentadien, 1,3-hexadien. The above styrene series resin may contain two or more of these conjugated dienic hydrocarbons, it also may contain polymerable monomer other than conjugated dienic hydrocarbon.

One of the copolymer of a styrene series hydrocarbon and a conj ugated dienic hydrocarbon suitably used for middle layer (M layer) is a styrene-butadienic copolymer (SBS) of which styrene series hydrocarbon is styrene and conjugated dienic hydrocarbon is butadiene. Styrene content ratio of SBS is 60 mass % or more, preferably 65 mass % or more, furthermore preferably 70 mass % or more; the upper limit of styrene content ratio is 95 mass %, preferably 90 mass %, furthermore preferably 85 mass %. When styrene content ratio is 60 mass % or more, it is capable to exhibit an impact-resistant effect. While, when the upper limit is set to 95 mass %, it is capable to preserve film's elastic modulus at a temperature hover around room temperature, thereby it is possible to obtain a film having excellent rigidity. Polymerization pattern in the case of using styrene-butadien copolymer as styrene series resin is not particularly limited. It is any one of patterns selected from block copolymer, random copolymer, and graft copolymer; it is preferably block copolymer containing pure structure, random structure, and taper structure.

Another example of copolymer of a styrene series hydrocarbon and a conjugated dienic hydrocarbon suitably used in the invention is styrene-isoprene-butadien block copolymer (SIBS). In SIBS, mass % ratio of styrene/isoprene/butadien is preferably (60~90)/(5~40)/(5~30), more preferably (60~85)/(10~30)/(5~25), furthermore preferably (60~80)/(10~25)/(5~20). Moreover, MFR measurement of SIBS (measurement condition: temperature 200°C, load 49N) is desirably 2g/10min or more, preferably 3g/10min or more, and 15g/10min or less, preferably 10g/10min or less, furthermore preferably 8g/10min or less. When content of butadien is large and content of isoprene is small, butadiene heated in extruder or the like takes place cross-linking reaction, which sometimes increases gelatinous material. On the other hand, when content of butadien is small and content of isoprene is large, unit price of the materials increase thereby it may cause increase of production cost.

The above styrene series resin may be used alone, or mixture of two or more kinds of styrene series resin respectively having different styrene content ratio from each other may also be used. Further, the above styrene series resin may be copolymer of a styrene series hydrocarbon and a conjugated dienic hydrocarbon being mixed with copolymer of the above copolymer and copolymerable monomer with styrene series hydrocarbon or conjugated dienic hydrocarbon; or homopolymer of styrene series hydrocarbon.

For example, when the above styrene series resin is a mixture of SBS and SIBS, mass % ratio of SBS/SIBS is preferably about (90~10)/(10~90), more preferably (80~20)/(20~80), furthermore preferably (70~30)/(30~70).

For the above styrene series resin composition, when a copolymer of a styrene series hydrocarbon and an aliphatic unsaturated carboxylic ester is used, as the above styrene series hydrocarbon component and aliphatic unsaturated carboxylic ester component, a copolymer obtained by copolymerizing at least one kind of compound selected from a group consisting of methyl acrylate or methacrylate, butyl acrylate or methacrylate, 2-ethylhexyl acrylate or methacrylate, lauryl acrylate or methacrylate, and stearyl acrylate or methacrylate can be used. It is preferably a copolymer of styrene and butyl acrylate or methacrylate, more preferably the copolymer of which styrene is in the range of 70 mass % or more and 90 mass % or less, Tg (peak temperature of loss elastic modulus E") is 50°C or more and 90°C or less, measurement of melt flow rate (MFR) (measurement condition: temperature 200°C, load 49N) is 2g/10min or more and 15g/10min or less. The above "acrylate or methacrylate" means acrylate and/or methacrylate.

Molecular weight of the above styrene series resin composition is that the weight-average molecular weight is 100,000 or more, preferably 150, 000 or more; and the upper limit thereof is 500,000 or less, preferably 400,000 or less, further more preferably 300, 000 or less. When weight-average molecular weight of styrene resin composition is 100,000 or more, defects which cause film deterioration can not be found, thus it is preferable. In addition, when weight-average molecular weight of styrene series resin composition is 500,000 or less, there is no need to adjust the flow property and is no defect like decline of extrusion property; thus such a molecular weight is preferable.

Measurement of melt flow rate (MFR) (measurement condition: temperature 200°C, load 49N) of the above styrene series resin composition is desirably 2g/10min or more, preferably 3g/10min or more, and 15g/10min or less, preferably 10g/10min or less, furthermore preferably 8g/10min or less. When MFR is 2g/10min or more, kinematic viscosity at extrusion forming is appropriate, therefore the above styrene resin composition having such MFR is excellent in productivity. While, when MFR is 15g/10min or less, appropriate cohesive force of resin can be obtained, thereby mechanical strength of the film is appropriate, and thus the film is suitable for the practical use.

Storage elastic modulus (E') at 0°C of styrene series resin composition contained in the middle layer (M layer) is preferably 1.00 x 10⁹Pa or more, more preferably 1.50 x 10⁹Pa or more. The storage elastic modulus (E') at 0°C indicates film stiffness, namely, film rigidity. If the film has 1.00 x 10⁹Pa or more of storage elastic modulus (E'), when films are laminated, film rigidity (stiffness at room temperature) can be given to the laminated film. Especially, if the thickness of the laminated film is made thin, when packaged film is made to cover containers like PET bottles by using labeling machines and so on, such film can prevent phenomena of oblique coverage and decline of yield due to the label bending; thus it is preferable. This storage elastic modulus (E') can be obtained by using the above styrene series hydrocarbon and conjugated dienic hydrocarbon block copolymer, mixture of two or more kinds of the copolymers, or adding other resins in the range without deteriorating the transparency.

When styrene resin composition contained in the middle layer (M layer) is a block copolymer mixture of a styrene series hydrocarbon and a conjugated dienic hydrocarbon respectively having different styrene content ratio from each other or a mixture of the block copolymer with other resins, appropriate selection of resin giving rupture-resistance and resin giving stiffness make it possible to obtain preferable result. In other words, by combining styrene series hydrocarbon-conjugated dienic hydrocarbon block copolymer having high rupture-resistance and the above copolymer having high stiffness, or by mixing styrene series hydrocarbon-conjugated dienic hydrocarbon block copolymer having high rupture-resistance and other resin having high stiffness, it is capable to adjust total composition of those styrene series hydrocarbon-conjugated dienic hydrocarbon or mixtures thereof with other types of resin can be adjusted to meet the storage elastic modulus (E') at desired n₁ and 0°C.

Preferable examples of styrene series hydrocarbon-conjugated dienic hydrocarbon block copolymer which is capable to give rupture-resistance are pure block SBS and random block SBS. Especially, the storage elastic modulus (E') at 0°C is preferably 1.00 x 10⁸Pa or more and 1.00 x 10⁹Pa or less. Moreover, it is preferable that such copolymer has viscoelastic property such that at least one of peak temperatures of loss elastic modulus (E") is -20°C or less. When the storage elastic modulus at 0°C is 1.0 x 10⁸Pa or more, it is capable to give film rigidity by increasing the blending amount of resin which can give stiffness. While, at a peak temperature of the loss elastic modulus (E"), a temperature in low temperature side mainly means rupture-resistance of the film. This property may be varied depend on elongation condition. However, in the condition of pre-elongation, if peak temperature of the loss elastic modulus (E") does not exist at -20°C or less, giving a sufficient film rupture to the laminated film may become difficult.

Examples of resin which is capable to give stiffness to a film include a copolymer containing styrene series hydrocarbon of which storage elastic modulus (E') at 0°C is 2.00 x 10⁹Pa or more, such as block copolymer of a styrene series hydrocarbon and a conjugated dienic hydrocarbon whose block structure is controlled, polystyrene, copolymer of styrene series hydrocarbon and aliphatic unsaturated carboxylic ester.

Examples of styrene series hydrocarbon-conjugated dienic hydrocarbon block copolymer whose block structure is controlled include SBS of which storage elastic modulus (E') at 0°C is 2.00 x 10⁹Pa or more as the property of a styrene-butadien block copolymer. The styrene-butadien composition ratio of SBS satisfying the above condition may preferably be adjusted as follows: styrene/butadiene=(95~80)/(5~20).

A copolymerization method which make it possible to satisfy the above viscoelastic property will be described as follows. A part of styrene or butadien is polymerized in a normal manner, after completion of the polymerization, a mixture of styrene monomer and butadien monomer is added and the polymerization reaction is continued. By taking this method, butadien having high polymerization activity is preferentially polymerized, finally, a block constituted by single monomer of styrene is made. For instance, styrene is homopolymerized first, then when the polymerization is completed, a mixture of styrene monomer and butadien monomer is added thereto and polymerization is continued. In the mean time, styrene-butadien block copolymer, having styrene·butadien copolymer portion whose ratio of styrene butadien monomer is gradually changed between styrene block and butadien block, can be obtained. Having such a portion, it is capable to obtain a polymer having the above viscoelastic property. In this case, two peaks attributed to the abovementioned butadien block and styrene block cannot clearly obserbed, and one apparent peak can seemingly observed. As it were, in pure block and block structure like SBS of random block having clear existence of butadien block, Tg attributed to butadien block mainly exists at 0°C or less, to raise the storage elastic modulus (E') to more than the predetermined value becomes difficult. About molecular weight, it is adjusted under a condition such that MFR measurement (measurement condition: temperature 200°C, load 49N) is 2g/10min or more and 15g/10min or less. Mixing amount of styrene-butadien block copolymer which is capable to give this stiffness is adequately adjusted depends on characteristics of the heat-shrinkable laminated film. To total amount of resin for forming the middle layer (M layer), it is desirably adjusted in the range of 20 mass % or more, preferably 40 mass % or more, and 80 mass % or less, preferably 70 mass % or less. When the mixing amount of styrene-butadien block copolymer is 80 mass % or less to total amount of resin, the film stiffness can be largely improved and the decline of rupture-resistance can be suppressed. Whereas, when it is 20 mass % or more to total amount of resin, sufficient stiffness can be given to the film.

Content ratio of the above styrene resin composition, to total amount of resin for forming the middle layer (M layer), is 50 mass % or more, preferably 65 mass % or more, furthermore preferably 80 mass % or more. If general-purpose polystyrene (GPPS) is contained, since Tg (peak temperature of loss elastic modulus E") of GPPS is extremely high like 100°C, the content of ratio GPPS to be mixed is desirably 40 mass % or less, preferably 30 mass % or less, furthermore preferably 20 mass % or less to total amount of resin for forming the middle layer (M layer).

Styrene resin contained in the middle layer (M layer) may have mixing of other resins, if 50 mass % or more of the styrene series resin is contained to total amount of resin for forming the middle layer (M layer) as mentioned above. Examples of such other resin include polyester series resin, polyolefin series resin, acrylic resin, polycarbonate resin. Among them, polyester series resin is preferably used.

The middle layer (M layer) of the invention may include resin composition constituting main components of the surface layer (S layer) and adhesive layer (AD layer). If the middle layer (M layer) can accept the resin composition constituting main components of the surface Layer (S layer) and adhesive layer (AD layer), for example, it is possible to reuse recycled films obtained by trimming loss like heels of films, thereby production cost of the film can be reduced.

When the middle layer (M layer) include resin composition constituting the surface layer (S layer), to 100 parts by mass of the resin constituting the middle layer (M layer), the resin constituting the surface layer (S layer) is desirably 1 part by mass or more and 100 parts by mass or less, preferably 80 parts by mass or less, furthermore preferably 60 parts by mass or less. When the resin composition constituting the surface layer (S layer) is 100 parts by mass or less, it is capable to prevent the decline of film's mechanical strength and to preserve the transparency of the film at a time of addition of a reclamation material.

While, when the middle layer (M layer) include resin composition constituting the adhesive layer (AD layer), to 100 parts by mass of the resin constituting the middle layer (M layer), the resin constituting the adhesive layer (AD layer) is desirably 1 part by mass or more and 30 parts by mass or less, preferably 25 parts by mass or less, furthermore preferably 20 parts by mass or less. When the resin composition constituting the adhesive layer (AD layer) is 30 parts by mass or less, it is capable to preserve film rigidity and to suppress the natural shrinkage ratio. On the other hand, when it is 1 part by mass or more, it is capable to improve rupture-resistance and adhesiveness of the film.

Moreover, styrene series resin composition constituting middle layer (M layer), at the time of forming non-elongation film, is a resin composition desirably giving 1000MPa or more, preferably 1100MPa or more, furthermore preferably 1200MPa or more of elongation modulus in a direction perpendicular to main shrinking direction. If it is possible to give 1000MPa or more of elongation modulus, rigidity of the entire laminated film is strong. Especially, when thickness of the laminated film is made thinner, problems (such as a phenomena of oblique coverage or film bending, and decline of yield thereby at a time of fitting of a packaged film to cover containers like PET bottles by using labeling machines and so on) cannot be found. Thus this elongation modulus is preferable.
The above "non-elogation film" means a film made of styrene series resin composition as the raw material; it is a film which can be obtained without elongation at the time of film forming.

Examples of a commercially available product of the above styrene series resin composition include "CLEAREN" (produced by DENKI KAGAKU KOGYO KABUSHIKI KAISHA.), "Asaflex" (produced by Asahi Kasei Chemicals Corporation.), "Styroflex" (produced by BASD Japan Ltd.), "K-resin" (produced by Chevron Phillips Chemical International Ltd.).

### < the adhesive layer (AD layer) >

In the present invention, the adhesive layer (AD layer) includes copolymer of a styrene series hydrocarbon and a conjugated dienic hydrocarbon, or hydrogenated derivatives thereof. As a styrene series hydrocarbon, styrene is preferably used, styrene congener such as α-methyl styrene can also be used. Examples of a conjugated dienic hydrocarbon include 1, 3-butadiene, isoprene, 1,3-pentadien; these can be used alone or in combination with two or more thereof. Furthermore, the adhesive layer (AD layer) may include a small amount of a third component other than a styrene series hydrocarbon and a conjugated dienic hydrocarbon. When double bonds come from mainly vinyl bond of a conjugated dienic hydrocarbon part exist in large number, affinity with polyester series resin of the surface layer (S layer) is generated, and it is preferable to improve the interlayer adhesive strength (interlayer peeling strength).

When a copolymer of a styrene series hydrocarbon and a conjugated dienic hydrocarbon, or hydrogenated derivatives thereof is used as the adhesive layer (AD layer), content ratio of the styrene series hydrocarbon, to total amount of copolymer or hydrogenated derivatives thereof, is importantly 5 mass % or more, preferably 7 mass % or more, furthermore preferably 10 mass % or more, and 40 mass % or less, preferably 37 mass % or less, furthermore preferably 35 mass % or less. If content ratio of the styrene series hydrocarbon is 5 mass % or more of total amount, when recycled film is added to the surface layer (S layer), middle layer (M layer) or the surface layer (S layer) and middle layer (M layer), compatibility of film is excellent and a film whose transparency is preserved can be obtained; therefore it is preferable. On the other hand, if content ratio of the styrene series hydrocarbon is 40 mass % or less of total amount, the adhesive layer (AD layer) has rich in flexibility. For instance, when stress or impact is given to the entire film, damping effect to the stress generated between the surface layer (S layer) and the middle layer (M layer) works, thereby it is capable to suppress the interlayer peeling.

Glass transition temperature (Tg) of a copolymer of a styrene series hydrocarbon and a conjugated dienic hydrocarbon is preferably 20°C or less, more preferably 10°C or less, furthermore preferably 0°C or less. If the glass transition temperature (Tg) is 20°C or less, since flexible adhesive layer (AD layer) can become a damper when the laminated film receives stress. Thereby it is capable to suppress the interlayer peeling and therefore practically preferable.

The Tg in the invention is calculated as follows. As it were, firstly, with use of viscoelastic spectrometer DVA-200 (produced by IT Measurement Co., Ltd.), loss elastic modulus (E") is measured under the condition of vibrational frequency 10Hz, distortion 0.1%, and rate of temperature increase 3°C/min. From the obtained data, peak value of loss elastic modulus (E") is calculated; the temperature at the peak is defined as Tg. In case that plurality of peaks of loss elastic modulus (E") exist, the temperature of peak value whose loss elastic modulus (E") is the highest is defined as Tg.

Examples of commercially available product of the above copolymer include styrene-butadien block copolymeric elastomer (commodity name "Toughprene" produced by Asahi Kasei Chemicals Corporation.), hydrogenated derivatives of styrene-butadien block copolymer (commodity name "Toughtech H" produced by Asahi Kasei Chemicals Corporation.: commodity name "Kraton G" produced by Shell Chemicals Japan Ltd.), hydrogenated derivatives of styrene-butadien random copolymer (commodity name "Dynalon" produced by JSR Corporation), hydrogenated derivatives of styrene-isoprene block copolymer (commodity name "Septon" produced by Kuraray), styrene-vinyl isoprene block copolymeric elastomer (commodity name "Hybrar" produced by Kuraray).

By introducing polar group into a copolymer of a styrene series hydrocarbon and a conjugated dienic hydrocarbon, or hydrogenated derivatives thereof, interlayer peeling strength (interlayer adhesiveness) with the surface layer (S layer) constituted by polyester series resin composition can be further improved. Examples of polar groups to be introduced include anhydride group, carboxylic acid, carboxylic acid ester group, carboxylic acid chloride group, carboxylic amide group, carboxylic base group, sulfonic group, sulfonate group, sulfonic chloride group, sulfonic amide group, sulfonic base group, epoxy group, amino group, imide group, oxazoline group, hydroxyl group.
These copolymers can be used alone or in combination with two or more thereof.

Examples of copolymer of a styrene series hydrocarbon and a conjugated dienic hydrocarbon, or hydrogenated derivatives thereof to which the above polar groups are introduced typically include maleic anhydride modified SEBS, maleic anhydride modified SEPS, epoxy modified SEBS, epoxy modified SEPS. Particularly, commodity name "Toughtech M" produced by Asahi Kasei Chemicals Corporation. and commodity name "EPOFRIEND" produced by DAICEL CHEMICAL INDUSTRIES, LTD. are available.

As a resin composition constituting the adhesive layer (AD layer), not only the above styrene series hydrocarbon-conjugated dienic hydrocarbon copolymer and the like, a mixed resin of a polyester series resin used for the surface layer (S layer) and a styrene series resin for the middle layer (M layer) can be used. By using the mixed resin for the adhesive layer, it is capable to adhere polyester series resin contained in the surface layer (S layer) and polyester resin component contained in the adhesive layer (AD layer), and to adhere styrene series resin contained in the middle layer (M layer) and styrene series resin contained in the adhesive layer (AD layer) ; thereby it is capable to improve interlayer adhesive strength. A (Polyester series resin/styrene series resin) mixing ratio in the mixed resin is, from the view point of improvement of adhesive effect with neighboring layers, in mass % ratio, it is (20~80)/(80~20), preferably (30~70)/(70~30), furthermore preferably (40~60)/(60~40). By having 20 mass % or more of both of the resins constituting the adhesive layer, an excellent adhesive effect with the corresponding layer can be obtained.

In the invention, to the surface layer (S layer), the middle layer (M layer), and the adhesive layer (AD layer), unless otherwise causing remarkable inhibition of the invention, not only the abovementioned component, for the purpose of workability, productivity, and improvement/adjustment of various properties of the heat-shrinkable film, recycled resin obtained by trimming loss like heels of films; inorganic particles such as silica, talc, kaolin; pigment such as titanium oxide and carbon black; additive agents such as fire retardant, weather-resistance stabilizer, heat resistance stabilizer, antistatic agent, melt viscosity improver, cross-linker, lubricant, nucleating agent, plasticizer, and antiaging agent, can be added, if necessary. The recycling resin obtained by trimming loss like heels of films and so on is desirably added to the surface layer (S layer) and the middle Layer (M layer), preferably to the middle layer (M layer).

In the film of the invention, a layer which can give heat resistance property (hereinafter, refer to "heat resistant layer".) can be formed onto the surface layer (S layer). As materials constituting the heat resistant layer, for example, various kinds of surfactant can be used. Surfactants has been commonly known to be used as antistatic agent, and also known that it can give antistatic and static-stopping effect by mixing with certain resins and forming coat layers on the film surface. However, the fact that surfactants can give heat resistance has not been commonly known. The present inventors have been conducted serious studies about surfactant. As a result, the present inventors have acquired an idea that, by laminating surfactants (particularly cation series surfactant or amphoteric surfactant) on the surface layer (S layer), heat resistance of the film can be improved. By forming such heat resistant layer on the surface layer (S layer), for example, when PET bottles for heating use is heated by heater, it is possible to effectively prevent the film fitted to PET bottles from fusion-bond to hot plate and the films fitted to PET bottles from adhering each other.

The above surfactant is not particularly limited; carious kinds of surfactant can be used. Examples of anionic surfactant include low molecular compounds such as fatty acid amine salt, alkyl phosphate type, alkyl sulfate type, and alkyl aryl sulfate type; further, high molecular compounds such as poly alkylene sulfate and copolymer thereof. Examples of cationic surfactant include alkyl amine sulfate type quaternary ammonium salt type, quaternary ammonium resin type, pyridium salt, morpholine derivatives. While, examples of non-ionic surfactant include sorbitan type, ether type, amine type, amide type, ethanol amide type, fatty acid glycerin ester, and alkyl polyethylene imine. Also, examples of zwitterionic surfactant include alkyl betaine type, alkyl imidazoline derivatives, N-alkyl, and β-alanine type.

The above heat resistant layer can be formed by applying embrocation obtained by solving the above surfactant in solvent. As the solvent, water or mixture of water and water-soluble organic solvent can be used. Preferable examples of the above water-soluble organic solvent include: alcohols such as methanol, ethanol, isopropyl alcohol, n-propyl alcohol, tert-butyl alcohol, 1,2-propylene alcohol; glycols such as ethylene glycol, propylene glycol, diethylene glycol, ethylene glycol monomethyl ether, ethylene glycol monoethylether, ethylene glycol monobutylether, diethylene glycol monomethylether, ethylene glycol monophenylether, or derivatives thereof; ketones such as acetone, diacetone alcohol; and water-soluble ethers, water-soluble esters.

Examples of coating method to the surface layer (S layer) include spray coating method, air knife coating method, river coating method, kiss coating method, gravure coating method, reverse roll coating method, dies coating method, Meyer bar coating method, roll-brush coating method, bar coating method, reverse kiss coating method, offset gravure coating method, doctor blade method, curtain coating method, dipping method. These may be used alone or in combination with two or more thereof. The amount of embrocation is not particularly limited. However, in order to obtain a desirable heat resistant effect, as the solid portion, it is preferably in the range of 0.0005g/m² or more and 0.5g/m² or less, preferably 0.001g/m² or more and 0.1g/m² or less.

### < configuration of film layer >

The heat-shrinkable laminated film of the present invention is not particularly limited as long as it is at least a film of three-layers configuration having an adhesive layer (AD layer) between the surface layer (S layer) and middle layer (M layer). The middle layer (M layer) may be single layer or multilayer; the multilayer may has layers therein equivalent to the surface layer (S layer).

A preferable lamination configuration for the invention is a five-layers configuration having the surface layer (S layer)/the adhesive layer (AD layer)/the middle layer (M layer) /the adhesive layer (AD layer) /the surface layer (S layer). By applying the layer configuration, the purpose of the invention such as excellent shrink finishing quality, film rigidity, transparency at a time of addition of a reclamation material, and a small natural shrinkage and reduction of mechanical strength over time, with suppressed film interlayer peeling and shrinking stress, and which is applicable to shrinkable packing, shrinkable bond-packing, shrinkable label and the like in productive and economical way.

Now, one of the suitable embodiments of a five-layers configuration film having (S layer)/(AD layer)/(M layer)/(AD layer)/(S layer) consists of the surface layer (S layer), the middle layer (M layer), and the adhesive layer (AD layer), will be described as follows.
Thickness ratio of each layer can be set in accordance with the above effects and functions, it is not particularly limited. In the invention, thickness ratio of the surface layer (S layer) to the entire film is 10% or more, preferably 20% or more, the upper limit is 70% or less, preferably 65% or less. Further, thickness ratio of the middle layer (M layer) to the entire film is 20% or more, preferably 30% or more, the upper limit is 80% or less, preferably 70% or less. Thickness of the adhesive layer (AD layer), from the view point of its function, is in the range of 0.5 µm or more, preferably 1µm or more, and 6µm or less, preferably 5µm or less. If the thickness of respective layers are within the above range, a heat-shrinkable laminated film which exhibits excellent film rigidity (stiffness at room temperature), shrink finishing quality, transparency at a time of addition of a reclamation material, and a small natural shrinkage and reduction of mechanical strength over time, with suppressed film interlayer peeling and shrinking stress, and which is applicable to shrinkable packing, shrinkable bond-packing, shrinkable label and the like can be obtained in a favorable balance.

When a heat resistant layer is placed on the surface layer (S layer), the heat resistant layer is applied so as to become a thickness of 0.0006g/m² or more, preferably 0.0015g/m² or more, further preferably 0.0045g/m² or more. If the desired heat resistance can be obtained by the application, furthermore application is not needed. Maximum amount and thickness of application can be set in line with the cost.

### < physical and mechanical properties of the film >

The film of the present invention need to have 1200MPa or more of elongation modulus in a direction perpendicular to the main shrinking direction measured in accordance with JIS K7127, more preferably 1300MPa, furthermore preferably 1400MPa or more. Upper limit of the elongation modulus of normally used heat-shrinkable laminated film is about 3000MPa, preferably about 2900MPa, furthermore preferably about 2800MPa. When the elongation modulus is 1200MPa or more, rigidity of the entire film (stiffness at room temperature) is high. Especially, if the thickness of the laminated film is made thin, when packaged film is made to cover containers like PET bottles by using labeling machines and so on, such film can prevent phenomena of oblique coverage and decline of yield due to the label bending; thus it is preferable. The above elongation modulus is measured at 23°C in accordance with JIS K7127.
In this description, the "main shrinking direction" of the film means a direction of larger elongation in comparison with the longitudinal direction and the crosswise direction. For example, when the film is fitted onto a bottle, it is a direction equivalent to outer circumferential direction of the bottle.

In the film of the invention, the rupture elongation in the film main shrinking direction needs to be 40% or more at 23°C measured in accordance with JIS K7127. It is preferably 50% or more, further preferably 60% or more. The upper limit of rupture elongation of normally used heat-shrinkable laminated film is about 100% or more and 200% or less.

In the film of the invention, the rupture elongation in a direction perpendicular to the film main shrinking direction at -5°C measured in accordance with JIS K7127 is 100% or more. It is preferably 200% or more, furthermore preferably 300% or more.

Moreover, in the film of the invention, the rupture elongation in a direction perpendicular to the film main shrinking direction at -5°C, after 30 days storage at 30°C, measured in accordance with JIS K7127 is 100% or more. It is preferably 200% or more, furthermore preferably 300% or more.

The rupture elongation is an index to guess a resistance to the perforation breakage of heat-shrinkable label. The "perforation" means one or two or more perforated lines processed in advance on labels so as to easily open up the the labels or cap seals fitted onto plastic bottles or glass bottles by heat shrinking, and to easily peel such labels from bottles or glass bottle at a time of recycling. The perforation process is usually done with use of perforation cutter at a time of center seal processing. The "perforation breakage" means a phenomenon such that when shrinkable labels are fitted to bottles and the labeled bottles are transported to and sold in shops, for instance, if impact is given on a bottle by falling down of the bottle on the ground, stress is concentrated on the perforated part thereby the perforation is broken. Therefore, perforation breakage is not preferable. When it is a film of which rupture elongation in the film main shrinking direction is 40% or more at 23°C, perforation breakage is difficult to be occurred even when impact is given on the bottles; thus it is practically preferable. On the other hand, when it is a film of which rupture elongation in the direction perpendicular to the film's main shrinking direction is 100% or more at -5°C, a sufficient mechanical strength can be obtained even at low temperatures, and the film breakage is difficult to be occurred; thus it is practically preferable. In addition, it the rupture elongation over time is 100% or more, even after long time storage, the mechanical strength is preserved, the film is difficult to be broken during printing and film-fitting processes. Thus, it is practically preferable.

Rupture elongation is measured in accordance with JIS K7127, in particular, at 23°C or -5°C, to the film' s main shrinking direction or the direction perpendicular thereto, individual films can be evaluated by conducting tensile test of which testing rate 200mm/min.

In the heat-shrinkable laminated film of the invention, it is important that heat shrinkage ratio in the main shrinking direction when heated in 70°C water for 10 seconds is 10% or more and 40% or less, preferably 10% or more and 35% or less; it is also important that the heat shrinkage ratio in the main shrinking direction when heated in 80°C water for 10 seconds is 30% or more and 70% or less, preferably 35% or more and 65% or less.

The heat shrinkage ratio at the above temperatures is an index of judging adaptability to the relatively short-time (several seconds to dozen seconds) shrinking process of label shrinkage for PET bottles. For example, necessary heat shrinkage ratio required for heat-shrinkable film which is applicable to shrinkable labels for PET bottles is varied depend on the shapes, in general, it is 20% or more and 70% or less.

A heat shrink machines, currently industrially most widely used for label fitting to PET bottles, is the so-called "steam shrinker" using water vapor as a heating medium for shrinking process. The heat-shrinkable film, from the view point of influence of heat to objects to be covered, is necessary to be sufficiently heat shrink at as low temperatures as possible. Nevertheless, if the film is highly heat dependent and its heat shrinkage ratio is extremely different depends on the heat, parts of which shrinkage behavior is different can be easily caused by temperature spots in the steam shrinker. Because of this, shrinking spots, wrinkles, and pocks are produced, thereby shrink finishing quality appearance tends to become worse. From the view point of industrial productivity, if the film has a heat shrinkage ratio within the range of the above condition, the film can sufficiently adhere to the objects to be covered within a certain shrinking time, and does not produce shrinking spots, wrinkles, and pocks. An excellent shrink finishing quality appearance can be obtained, thus it is preferable.

When the film of the invention is used as a heat-shrinkable label, the shrinkage ratio of longitudinal direction (the direction perpendicular to the main shrinking direction) when heated in 80°C water for 10 seconds is preferably 10% or less and 5% or less, furthermore preferably 3% or less. Also, When heated in 70°C water for 10 seconds, the shrinkage ratio is preferably 10% or less, and further preferably 5% or less, furthermore preferably 3% or less. This has to be noted that if the shrinkage ratio of the film in the direction perpendicular to the main shrinking direction is 10% or less, problems, like shortening of dimensions in the direction perpendicular to the main shrinking direction after shrinkage, or easily caused distortion of printed patterns or letters after shrinkage, and longitudinal sink mark in the case of bottle of prismatic shape, are difficult to be appeared; thus it is preferable.

In the film of the invention, the gap between the heat shrinkage ratio in the film main shrinking direction when heated in 70°C water for 10 seconds and the heat shrinkage ratio in the film main shrinking direction when heated in 80°C water for 10 seconds is desirably 40% or less, preferably 35% or less, further preferably 30% or less. By keeping the gap of heat shrinkage ratio within the range of 40% or less at 70°C and 80°C, at a time of bottle labeling, it is capable to inhibit uneven shrunk attributed by the uneven temperature of vapor; consequently, it is possible to inhibit wrinkles, pocks and the like.

Natural shrinkage ratio of the film of the invention is desirably small. In general, natural shrinkage ratio of heat-shrinkable film is, for example, 3.0% or less after 30 days storage at 30°C, preferably 2.0% or less, further preferably 1.5% or less. When the natural shrinkage ratio of heat-shrinkable film is 3.0% under the above condition, even though the produced film is stored for long period, it is possible to stably fit the label to the object containers and it is practically difficult to cause problems.

Transparency of the film of the invention, haze measured in accordance with JIS K7105 is preferably 10% or less, further preferably 7% or less, furthermore preferably 5% or less. When haze is 10% or less, transparency of film can be obtained, thereby display effect can be obtained.

In addition, even when the middle layer (M layer) contains, to 100 parts by mass of resin constituting the middle layer (M layer), 1 part by mass or more and 30 parts by mass or less of resin consisting the surface layer (S layer) and/or the adhesive layer (AD layer) (e.g., when recycled resin obtained by trimming loss like heels of films and the like is added), the film of the invention can keep its haze of a film with thickness 50µm measured in accordance with JIS K7105 in the range of 10% or less, preferably 7% or less, further preferably 5% or less. When haze of the film of the invention is 10% or less after addition of a reclamation material of the surface layer (S layer) and/or the adhesive layer (AD layer) to the middle layer (M layer), it is possible to have excellent transparency even though it is a recycled product.

In the film of the invention, film's maximum shrinking stress in the film main shrinking direction when soaked in 90°C silicone oil for 10 seconds is desirably 8.0MPa or less, preferably 7.5MPa or less, further preferably 7.0MPa or less. The lower limit of the above shrinking stress is: for the first embodiment, 4.0MPa or more, preferably 4.5MPa or more, furthermore preferably 5.0MPa or more; for the second embodiment, 1. 0MPa or more, preferably 1. 5MPa or more, furthermore preferably 2.0MPa or more. When the maximum shrinking stress is 8.0MPa or less, when label fitting is conducted by the steam shrinker, to temperature spots in the shrinker, parts whose film shrinking behavior is different can be difficult to be produced, spots, wrinkles, pocks are also difficult to be produced. Therefore, the shrink finishing quality is excellent. Moreover, when the label is used for PET bottle with hot drinks, it is preferable that the film can inhibit contents overflow. On the other hand, when the maximum shrinking stress is 1.0MPa or more, preferably 5.0MPa or more, for example, if the label is fitted to the bottle by heat shrinking, the label and the bottle are completely adhered each other and the shrink finishing quality thereof is excellent. Therefore, it is preferable that the so-called "tomomawari (rotation to each other) (a phenomenon that a label and a bottle are misaligned; for instance, a printed image of the label supposed to be at a panel face of prismatic-shape bottle comes off to the bottle edge, visibility is spoiled, thereby it is not preferable.)" can be inhibited. Further, these days, due to the development of thin-walled bottles, when PET bottles in various shapes which are filled with contents, it expands by the inner pressure, which may also spoil the appearance of the bottles. To this problem, if the maximum shrinking stress is 1.0MPa or more, preferably 5.0MPa or more, the film can give a sufficient effect of correcting the bottle expansion with use of the film stress. Thus, it is preferable.

Seal strength of the film of the invention, which is measured by the measuring method described in following examples, is 3N/15mm width or more, preferably 4N/15mm width or more, furthermore preferably 5N/15mm width or more, and 15N/l5mm width or less, 12N/15mm width or less. The "seal strength" means a peeling strength of the seal portion made at a time of film packaging by below-mentioned center seal. It is important that if interlayer adhesiveness between the surface layer (S layer) and the adhesive layer (AD layer) or the adhesive layer (AD layer) and middle layer (M layer) is poor, at a time of seal strength measurement, it is not the peeling between a pair of film surface, but interlayer peeling is possibly going to be proceeded prior to the peeling between the film surfaces; therefore sufficient seal strength cannot be secured. The film of the invention has a sufficient interlayer adhesiveness, as seal strength thereof is 3N/15mm width or more, there is not a trouble like peeling of sealing part when used.

### < production method of the film >

The film of the present invention can be produced by commonly known methods. As film shapes, it may be flat-type or tube-type, from the view point of productivity (possibility to take several cut-films as film products to the original film in the width direction) and feasibility of printing on the inner surface, flat-type is preferable. As a production method of flat-type film, for instance, resins are firstly melted with use of plurality of extruders, and the melted resins are co-extruded from T-dies. The co-extruded material is cooled and become solidified by using chilled roll, then elongated with roll in the longitudinal direction and with tenter in the crosswise direction, annealed, cooled, and finally winded by a winder (if the film surface is to be printed, the surface is treated by corona discharge treatment before winded), so as to obtain the film. The flat-type film can also be obtained by open up a film produced by tubular film process.

Among properties of the above films, shrinking property and shrinking stress mainly depend on the elongation temperature and elongation magnification. When the magnification is larger and elongation temperature is lower, both of shrinking property and shrinking stress become larger, moreover, the film is influenced by thermal treatment (annealing, particularly relaxation thermal treatment) being conducted after elongation. Elongation temperature needs to be varied depend on Tg of resin composition to be used or the required properties of the film. It is controlled in the range of about 60°C or more, preferably 70°C or more, furthermore preferably 80°C or more, and the upper limit is 130°C or less, preferably 120°C or less, furthermore preferably 110°C or less. When the elongation temperature is 60°C or more, the film exhibits excellent elongation, but also it is easier to adjust the shrinking stress set in the invention below the upper limit (8MPa or less). Whereas, when the elongation temperature is 130°C or less, elastic modulus of the materials can be appropriately preserved; it is easier to obtain excellent film in thickness accuracy, especially when the film is elongated at a temperature of 120°C or less, adjustment of lower limit of the maximum shrinking stress can become easier.

Depend on the properties of resin composition to be used, elongation means, elongation temperature, and object product shapes, elongation magnification is suitably determined in the main shrinking direction in the range of 1. 5 times or more, preferably twice or more, more preferably 3 times or more, furthermore preferably 4 times or more, and 10 times or less, preferably 7 times or less, along monoaxial or biaxial directions. Especially, when the magnification is particularly 7 times or less, it is easier to adjust the maximum shrinking stress set in the invention below the upper limit (8MPa or less), thereby it is easier to obtain excellent film in thickness accuracy. When the film is elongated along monoaxis in crosswise direction, for the purpose of the improvement of film's mechanical properties or the like, giving small elongation of 1.05 times or more and 1. 8 times or less in the longitudinal direction may be effective. And, the elongated film is, if necessary, for the purpose of lowering the natural shrinkage rate and improvement of heat shrinking properties, treated with thermal-treatment and relaxation treatment at 50°C or more and 100°C or less. Then, the film is quickly cooled before the molecular orientation is loosening up, so as to obtain the heat-shrinkable laminated film.

For the use of shrinkage in two directions such as for overlapping, elongation magnification, in the longitudinal direction, is twice or more, preferably 3 times or more, and the upper limit is 10 times or less, preferably 6 times or less. In the crosswise direction, it is twice or more, preferably 3 times or more, and the upper limit is 10 times or less, preferably 6 times or less. While, for the use of shrinkage in one direction such as shrinkable labels, the magnification is twice or more and 10 times or less, preferably 4 times or more and 8 times or less in the main shrinking direction. Also, in the direction perpendicular to the main shrinking direction, it is same size or more and twice or less (same size means a film which is not elongated.), preferably 1.1 times or more and 1.5 times or less. Substantially, it is desirable to determine a certain magnification within the range of monoaxial elongation. In a film of biaxial elongation elongated within the above elongation magnification, heat shrinkage ratio thereof in the direction perpendicular to the main shrinking direction does not become too large. For example, when the film is used as heat-shrinkable label, it is possible to inhibit the so-called "longitudinal sink mark" phenomenon wherein the film is thermally shrink even in the container height direction when fitted to the bottle. Thus, such a film is preferable.

Thickness of the film of the invention is not particularly limited. It is normally 20µm or more, preferably 30µm or more, and 80µm or less, preferably 70µm or less. When the thickness is 20µm or more, film's handling property is excellent; while, when it is 80µm or less, the film exhibits excellent transparency and shrink processing, but also it is economically preferable. Further, if necessary, surface treatment or surface process such as corona discharge treatment, printing, coating, and vapor deposition, moreover, bag-making process by various solvent and heat seal, perforation process can be made.

The film of the invention is shaped from flat shape into cylindrical shape and so on with the object to be covered by the film for packaging. To make cylindrical containers for such as PET bottles when requires to have printing thereon, necessary images are printed on entire surface of the wide-width flat film winded by a roll, then, the printed film is cut into a film having required width and folded so as to make the printed surface become inner surface of the film, finally center seal (shape of seal portion is the so-called "envelop seams") is provided to complete the cylindrical shape. As a method of center sealing, there may be a method of adhesive bonding by organic solvent, a method by heat seal, a method by adhesive, and a method by impulse sealer. Among these, from the view point of productivity and pleasing appearance, a method of adhesive bonding by organic solvent is suitably used.

### [a molded product, a heat-shrinkable label, and a container]

Since the film of the invention exhibits excellent low-temperature shrinkage, shrink finishing quality, transparency, natural shrinkage and so on, its usage is not particularly limited. If necessary, by forming printed layer, deposited layer and other functional layers, various molded products such as bottles (blown bottles), trays, lunch boxes, containers for food of delicatessen, containers for dairy products. Especially, when the film of the invention is used as heat-shrinkable labels for food containers (for instance, PET bottles for soft drinks or food, glass bottles, preferably PET bottles), the film is capable to adhere to the complex shapes (e.g., cylindrical column, quadrangular prism, pentagonal prism, and hexagonal column respectively having corners, etc.), thus containers being fitted with labels of pleasing appearance without having wrinkles and pocks can be obtained. The molded products and containers of the invention can be produced by using normal molding method.

The film of the invention exhibits excellent low-temperature shrinkage and shrink finishing quality. It is used as heat-shrinkable label material for plastic molded products being deformed by heating at high temperatures, but also it is used as heat-shrinkable label material for packaging (containers) using materials as constituent thereof, whose thermal expansion and water absorption rate are extremely different from that of the heat-shrinkable film of the invention, for example at least one kind of material selected from a group consisting of: metal, porcelain, glass, paper, polyolefin series resin such as polyethylene, polypropylene, and polybutene; polymethacrylate series resin; polycarbonate series resin; polyester series resin such as polyethylene terephthalate and polybutylene terephthalate; and polyamide series resin, are used as the constituting materials.

Examples of materials constituting plastic packaging to which the film of the invention can be applicable include not only the above resins, but also polystyrene, rubber-modified high-impact polystyrene (HIPS), styrene-butyl acrylate copolymer, styrene-acrylonitrile copolymer, styrene-maleic anhydride copolymer, acrylonitrile-butadien-styrene copolymer (ABS), methacrylate ester-butadien-styrene copolymer (MBS), polyvinyl chloride series resin, phenol resin, urea resin, melamine resin, epoxy resin, unsaturated polyester resin, silicone resin. These plastic packaging may be a mixture of two or more kinds of resins or lamination thereof.

### Examples

The present invention will be described with examples as follows. Measurement values and evaluation criteria thereof shown in the examples are defined as follows. Here, a take-over (flow) direction of the laminated film is called as MD (Machine Direction), and a direction perpendicular to the MD is called as TD (Transverse Direction).

### (1) Elongation modulus

Elongation modulus was measured in a direction (MD) perpendicular to the film's main shrinking direction at 23°C in accordance with JIS K7127. Results evaluated in line with the following criteria also shown in the tables.
⊚: elongation modulus is 1400MPa or more;
○: elongation modulus is 1200MPa or more and below 1400MPa; and
×: elongation modulus is below 1200MPa.

### (2) Heat shrinkage ratio

A film was cut into pieces each having a size of 10mm in MD and 100mm in TD, and the pieces were respectively soaked in 70°C, 80°C, and 90°C hot-water bath for 10 seconds, then the amount of shrinkage was measured. Heat shrinkage ratio is defined by that a ratio of the shrinkage amount to the original dimension before shrinkage in the film's main shrinking direction (TD) and the ratio is shown in % value.

### (3) Natural shrinkage ratio

A film was cut into pieces each having a size of 50mm in MD and 1000mm in TD, and left them in thermostatic bath under an atmosphere at 30°C for 30 days. Then, the shrinkage amount to the original dimension before shrinkage in the film's main shrinking direction (TD) was measured, and the ratio is shown in % value.

### (4) Haze

Haze of the film was measured with a film of 50 µm in thickness in accordance with JIS K7105.

### (5) TD rupture elongation

TD rupture elongation was measured in the film's main shrinking direction (TD) under the condition at 23°C, testing rate 200mm/min in accordance with JIS K7127. At the time, 20 test pieces were tested, and average value thereof was defined as the TD rupture elongation.

### (6) MD low-temperature rupture elongation

MD low-temperature rupture elongation was measured in the direction (MD) perpendicular to the film's main shrinking direction under the condition at -5°C, testing rate 200mm/min in accordance with JIS K7127. At the time, 20 test pieces were tested, and average value thereof was defined as the MD low-temperature rupture elongation.

### (7) Low-temperature rupture elongation over time

After 30 days incubation in the thermostatic bath under an atmosphere at 30°C, low-temperature rupture elongation of the film was measured in the direction (MD) perpendicular to the film's main shrinking direction under the condition at -5°C, testing rate 200mm/min in accordance with JIS K7127. At the time, 20 test pieces were tested, and average value thereof was defined as the MD low-temperature rupture elongation.

### (8) Tg of resin for the adhesive layer (AD layer)

Pellet of a material resin for the adhesive layer (AD layer) was made into a sheet (thickness: 200µm) by heat stamping machine under the condition at 200°C, 10MPa, for 10 minutes. After that, the sheet was cut into test pieces of size 4mm x 60mm, and the respective test pieces were measured in the longitudinal direction by using viscoelastic spectrometer DVA-200 (produced by IT Measurement Co., Ltd.) under the condition of vibrational frequency 10Hz, distortion 0.1%, and rate of temperature increase 3°C/min, distance between chucks 25mm, from -150°C to 150°C. From the obtained data, a peak value of the loss elastic modulus (E") was calculated; the temperature of the peak value was defined as Tg.

### (9) Seal strength

At positions 10mm inside from the both ends in TD of the film, the both ends of the film were adhered each other with use of tetrahydrofuran (THF) solvent so as to produce a cylindrical label. The sealed portion was cut into the 15mm width in the circumference direction (TD), T-type peeling strength test with individual cut pieces was conducted in the tensile testing machine with thermostatic bath ("201X" produced by INTESCO, CO., Ltd) under the condition of testing rate 200mm/min in TD. Then, the testing results were evaluated in line with the following criteria.
⊚: seal strength is 5N/15mm width or more;
○: seal strength is 3N/15mm width or more and below 5N/15mm width; and
×: seal strength is below 3N/15mm width.

### (10) Shrink finishing quality

A film on which grid network with 10mm interval is printed was cut into a size of 100mm in MD x 298mm in TD. Portions of 10mm at both ends in TD of the film were overlapped each other and adhered by tetrahydrofuran (THF) solvent so as to produce a cylindrical film. The cylindrical film was fitted with a cylindrical PET bottle whose capacity is 1. 5L, it was come through the steam-heating type shrinking tunnel of which length was 3.2m (3 zones) within about 4 seconds without rotation. The atmospheric temperature in each zone of the tunnel was set within the range from 70°C to 85°C by adjusting the steam flow with flow control valve. After film coverage, shrink finishing quality was evaluated in line with the following criteria.
⊚: shrinkage is sufficient and no wrinkle, pock and distortion of the grid network is produced;
○: shrinkage is sufficient, but wrinkles, pocks and distortions of the grid network are slightly produced; and
×: shrinkage is sufficient, but wrinkles, pocks and distortions of the grid network are remarkably produced.

### (11) Haze of recycled film

The obtained heat-shrinkable film is pulverized by pulverizer and made into recycled pellet. After that, a certain amount of the pellet equivalent to 50 parts by mass to 100 parts by mass of the film was added to the middle layer (M layer) so as to obtain recycled films in a same manner as other individual examples. With use of the obtained recycled films, haze was measured in accordance with JIS K7105. Results were evaluated in line with the following criteria also shown in the tables.
⊚: haze is below 5%;
○: haze is 5% or more and below 10%; and
×: haze is 10% or more.

### (12) Contents overflow

A 500mL PET bottle (a bottle for "Maro-cha 500mL" produced by Coca-Cola (Japan) Company, Limited was used.) was filled with water to the height 5mm below the mouth, a film made into a cylindrical shape was made to cover the entire surface of the bottle up the height of its neck portion, the bottle with the film was come through the steam-heating type shrinking tunnel of which length was 3.2m (3 zones) within about 4 seconds without rotation. After the film shrinkage with the tunnel, the contents overflow was evaluated in line with the following criteria.
○: almost no content overflow;
Δ: sometimes content overflows; and
×: very frequently the content overflows.

### (13) Evaluation of heat resistance of the film

The obtained heat-shrinkable film is rolled around bottles, and a plurality of the bottles is placed such that the outer surface thereof (when antistatic agent was applied with the film, the applied surface) contacts each other. These bottles were heated by a heat seal tester "TP-701-A" produced by TESTER SANGYO CO., LTD. under 0.1MPa pressure from 70°C to 120°C at 1°C interval and preserve the temperature for 1 minute at each interval. After pressure-heating, test pieces were cut in to the size of 10mm x 40mm and peeled from the film ends, then existence of fusion bonding on the film surface was observed. A temperature just before fusion bonding of the film started was checked, and the temperature of which all test pieces were not fusion-bonded at N value=3 was defined as heat-fusion resistant temperature. Also, results were evaluated in line with the following criteria also shown in the tables.
⊚: test piece which fusion-bonds at 100°C or more;
○: test piece which fusion-bonds at 90°C or more and 100°C or less; and
×: test piece which fusion-bonds below 90°C.

### (Example A-1)

As shown in Table 1, as a polyester series resin composition for the surface layer (S layer), a mixed resin composition having 100 parts by mass of PETG ("Copolyester6763" produced by Eastman Chemical Company) (hereinafter, refer to "PETG".) and 10 parts by mass of PBT (DURANEX 2002 produced by Polyplastics Co., Ltd., Tg=45°C, Tm=225°C) (hereinafter, refer to "PBT 1".) containing 0. 05 mass % of amorphous silica of which average particle diameter is 2.4µm ("Sylysia 320" produced by FUJI SILYSIA CHEMICAL LTD.) was used. Also, as a styrene series resin composition for the middle layer (M layer), a resin composition containing 100 parts by mass of a mixed resin composition having 45 mass % of SBS (styrene/butadiene=90/10, storage elastic modulus E'=2.5 x 10⁹Pa, loss elastic modulus E" peak temperature=54°C, Vicat Softening point=76°C, hereinafter refer to "SBS1".) and 55 mass % of SBS(styrene/butadiene=71/29, storage elastic modulus E'=2.1 x 10⁸Pa, loss elastic modulus E" peak temperature =-46°C and 84°C, Vicat Softening point=69°C, hereinafter refer to "SBS2".), and 0.2 parts by mass of antioxidant (commodity name: Smiriser GS produced by Sumitomo Chemical Co., Ltd) was used. Further, as a copolymer of a styrene series hydrocarbon and a conjugated dienic hydrocarbon for the adhesive layer (AD layer), SIS (Clayton D1124 produced by JSR Clayton Polymer Co., Ltd., styrene content ratio: 30 mass %, Tg=-56°C, hereinafter refer to "AD1".) was used. Materials constituting each layer are fed into the respective biaxial extruders produced by MITSUBISHI HEAVY INDUSTRIES,LTD. and melt-mixed at the set temperature 240°C, co-extrusion by five-layer three-kind dies was conducted so as to have a film thickness of each layer of the surface layer (S layer)/the adhesive layer (AD layer) /the middle layer (M layer) /the adhesive layer (AD layer)/the surface layer (S layer) = 55µm/7µm/151µm/7µm/55µm. The laminated film was taken-over by castroll at 60°C, was cooled and solidified so as to obtain non-elongated laminated sheet of 300m in width and 275µm in thickness. Then, with use of film tentering machine produced by KYOTO MACHINERY CO., LTD., the laminated film was elongated to 5.5 times in crosswise monoaxial direction at preheat temperature 100°C, elongation temperature 85°C. Later, thermal treatment was carried out at 95°C for 6 seconds, and finally the heat-shrinkable laminated film of thickness 50µm was obtained.
Moreover, the obtained film was pulverized by pulverizer to make recycled pellet, then 50 parts by mass thereof to 100 parts by mass of the film was added to the middle layer (M layer), by conducting the same manner as above, a recycled heat-shrinkable laminated film was obtained. As the resin composition for the middle layer (M layer) after recycling, to 100 parts by mass of styrene series resin composition constituting the middle layer, the resin composition constituting the surface layer (S layer) had 42 parts by mass and the resin composition constituting the adhesive layer (AD layer) had 4 parts by mass.
An obtained film which had no problem to all the evaluation items was marked as ○, a film which had at least one problem to the items was marked as × in the comprehensive evaluation. The result is shown in Table 2.

### (Example A-2)

As shown in Table 1, except for changing the content of PBT 1 used for the surface layer (S layer) to 15 parts by mass, and changing the elongation temperature to 80°C, Example A-2 was conducted in the same manner as Example A-1; a heat-shrinkable laminated film and a recycled heat-shrinkable laminated film were obtained. The evaluation results of these obtained films are shown in Table 2.

### (Example A-3)

As shown in Table 1, except for changing the mixed resin composition consisting of PETG and PBT 1 used for the surface layer (S layer) into PETG alone, and changing the thickness of non-elongated laminated sheet to the surface layer (S layer) /the adhesive layer (AD layer) /the middle layer (M layer) /the adhesive layer (AD layer)/the surface layer (S layer)= 69µm/7µm/123µm/7µm/69µm, Example A-3 was conducted in the same manner as Example A-1; a heat-shrinkable laminated film and a recycled heat-shrinkable laminated film were obtained. As the resin composition for the middle layer (M layer) after recycling, to 100 parts by mass of styrene series resin composition constituting the middle layer (M layer), the resin composition constituting the surface layer (S layer) had 80 parts by mass and the resin composition constituting the adhesive layer (AD layer) had 6 parts by mass. The evaluation results of these obtained films are shown in Table 2.

### (Example A-4)

As shown in Table 1, except for changing the elongation magnification in the crosswise monoaxial direction to 6.0 times, Example A-4 was conducted in the same manner as Example A-1; a heat-shrinkable laminated film and a recycled heat-shrinkable laminated film were obtained. The evaluation results of these obtained films are shown in Table 2.

### (Comparative Example A-1)

As shown in Table 1, except for the lack of the adhesive layer (AD layer) of Example A-1, and changing the composition of the middle layer (M layer) from the mixed resin composition of SBS1 and SBS2 to PETG alone, Comparative Example A-1 was conducted in the same manner as Example A-1; a heat-shrinkable laminated film and a recycled heat-shrinkable laminated film were obtained. The evaluation results of these obtained films are shown in Table 2.

### (Comparative Example A-2)

As shown in Table 1, except for changing the elongation magnification in crosswise monoaxial direction of Example A-1 to 7.5 times, Comparative Example A-2 was conducted in the same manner as Example A-1; a heat-shrinkable laminated film and a recycled heat-shrinkable laminated film were obtained. The evaluation results of these obtained films are shown in Table 2.

### (Comparative Example A-3)

As shown in Table 1, except for changing the thickness of each layer of the non-elongated laminated sheet to the surface layer (S layer)/the adhesive layer (AD layer)/the middle layer (M layer)/the adhesive layer (AD layer)/the surface layer (S layer)=93µm/7µm/75µm/7µm/93µm, Comparative Example A-3 was conducted in the same manner as Example A-1; a heat-shrinkable laminated film and a recycled heat-shrinkable laminated film were obtained. The evaluation results of these obtained films are shown in Table 2.

### (Comparative Example A-4)

As shown in Table 1, except for changing the elongation temperature of the elongation in crosswise monoaxial direction to 55°C, Comparative Example A-4 was conducted in the same manner as Example A-1. However, due to the film breakage during the film elongation, a heat-shrinkable laminated film elongated in predetermined magnification could not be obtained.

### (Comparative Example A-5)

As shown in Table 1, except for changing the temperature of the elongation in crosswise monoaxial direction to 125°C, Comparative Example A-5 was conducted in the same manner as Example A-1. However, the film was weighed down with the weight of its own and broken. Therefore the required heat-shrinkable laminated film could not be obtained.

### (Comparative Example A-6)

As shown in Table 1, except for changing AD1 used for the adhesive layer (AD layer) to SBS (styrene content ratio 87 mass %, Tg=36°C) (hereinafter, refer to "AD2".), Comparative Example A-6 was conducted in the same manner as Example A-1; a heat-shrinkable laminated film and a recycled heat-shrinkable laminated film were obtained. The evaluation results of these obtained films are shown in Table 2.

### (Comparative Example A-7)

As shown in Table 1, except for changing the mass ratio of the mixed resin composition consists of SBS1 and SBS2 used for the middle layer (M layer) into the ratio such that SBS1 is 20 mass % and SBS2 is 80 mass %, Comparative Example A-7 was conducted in the same manner as Example A-1; a heat-shrinkable laminated film and a recycled heat-shrinkable laminated film were obtained. The evaluation results of these obtained films are shown in Table 2.

### (Comparative Example A-8)

As shown in Table 1, except for changing AD1 used for the adhesive layer (AD layer) to ethylene-acrylic acid copolymer (EAA) ("NOVATEC A500W" produced by Japan polyethylene Corporation, content of acrylic acid (AA) 20 mass %) (hereinafter, refer to "AD3".), Comparative Example A-8 was conducted in the same manner as Example A-1; a heat-shrinkable laminated film and a recycled heat-shrinkable laminated film were obtained. The evaluation results of these obtained films are shown in Table 2.

[Table 1]

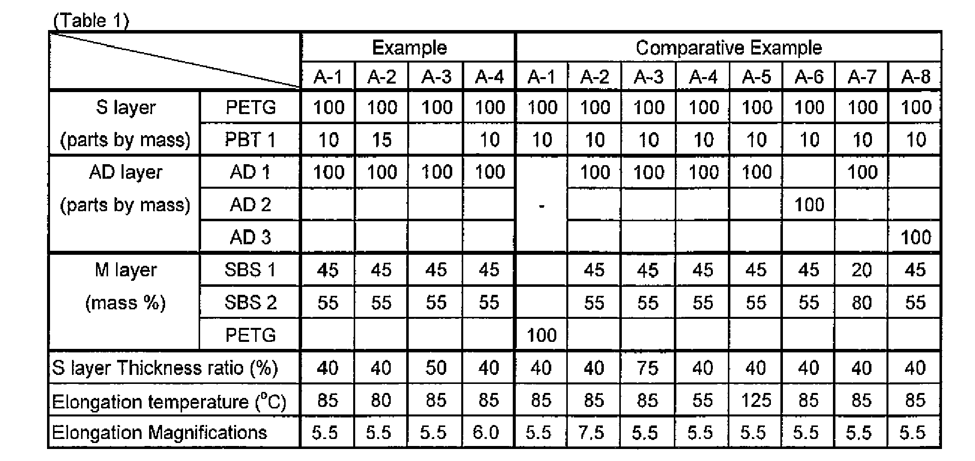

[Table 2]

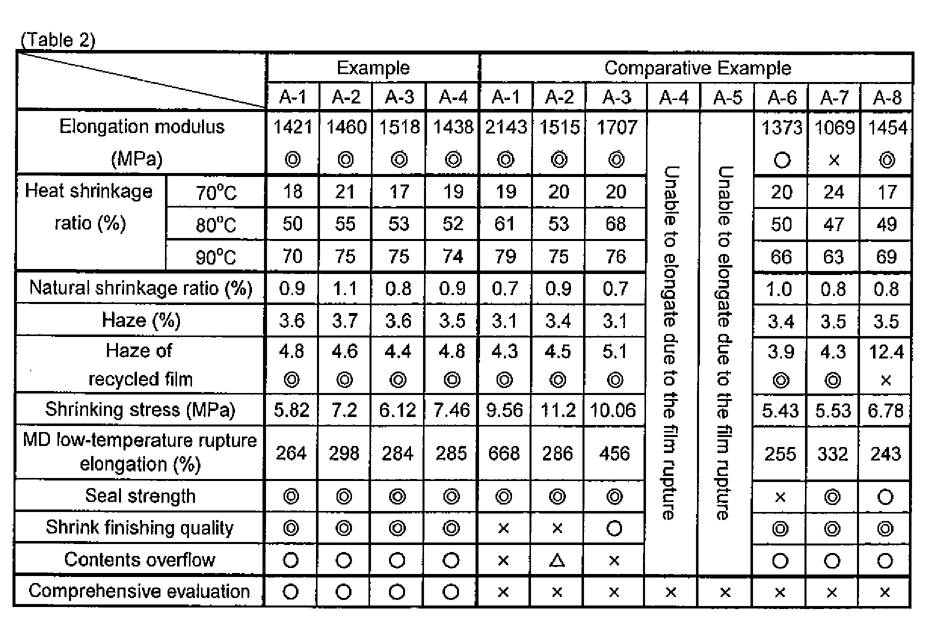

As seen from Tables 1 and 2, the films of Examples A-1~A-4, which were constituted by layers produced so as to be within the predetermined range of the invention, were respectively excellent in all the evaluation items of shrink finishing quality, peeling strength, transparency of the recycled film, and contents overflow compared with those properties of Comparative Examples A-1~A-8.
On the other hand, the film of Comparative Example A-1 constituted by polyester series resin composition only, the film of Comparative Example A-2 elongated in the outer range from the range predetermined by the invention, and the film of Comparative Example A-3 constituted by laminated films in the outer range from the lamination ratio predetermined by the invention, all had large shrinking stress, and lacked in shrink finishing quality. In addition, the films of Comparative Examples A-4 and A-5 elongated at a temperature in the outer range from the range predetermined by the invention had difficulties with elongation at the required magnification. Further, the films of Comparative Example A-6 and A-8 using resins, for the adhesive layer (AD layer), other than the resin composition that is predetermined by the invention did not exhibit sufficient sealing strength thereby transparency of the recycled film was remarkably deteriorated.
Accordingly, it is understood that the heat-shrinkable laminated film of the invention exhibits excellent film rigidity, small natural shrinkage, transparency of the recycled film, and reduction of mechanical strength over time, with suppressed film interlayer peeling and shrinking stress, and the film is applicable to shrinkable packing, shrinkable bond-packing, shrinkable label and the like.

### (Example B-1)

As shown in Table 3, as a resin composition of the surface layer (S layer), a mixed resin composition comprising as an amorphous polyester series resin 100 parts by mass of polyester resin copolymer (hereinafter, refer to "PET1".) having terephthalic acid residue as dicarboxylic acid residue and 68 mole % of ethylene glycol residue and 32 mole % 1,4-cyclohexane dimethanol residue as diol residue, and as a crystalline polyester series resin 30 parts by mass of polyester resin (hereinafter, refer to "PBT2".) having terephthalic acid residue as dicarboxylic acid residue and 1,4-butanediol residue as diol residue, were used. Also, as styrene resin of the middle layer (M layer), a resin composition containing 100 parts by mass of mixed resin composition having 45 mass % of SBS1 and 55 mass % of SBS2, and 0.2 parts by mass of antioxidant (commodity name: Smiriser GS produced by Sumitomo Chemical Co., Ltd) to 100 parts by mass of the above composition, was used. Moreover, as a styrene series hydrocarbon and a conjugated dienic hydrocarbon or derivatives thereof for the adhesive layer (AD layer), AD1 was used. Materials constituting each layer are fed into the respective biaxial extruders produced by MITSUBISHI HEAVY INDUSTRIES,LTD. and melt-mixed at the set temperature 240°C. Then, co-extrusion from five-layer three-kind dies was conducted so as to have a film having thickness of each layer: the surface layer (S layer)/the adhesive layer (AD layer)/the middle layer (M layer)/the adhesive layer (AD layer)/the surface layer (S layer)=55µm/7µm/151µm/7µm/55µm. The laminated film was taken-over by castroll at 60°C, was cooled and solidified so as to obtain non-elongated laminated sheet of 300m in width and 275µm in thickness. Then, with use of film tenter facility produced by KYOTO MACHINERY CO., LTD., the laminated film was elongated to 5.5 times in crosswise monoaxial direction at preheat temperature 105°C and elongation temperature 90°C. Later, the elongated film was quickly cooled and finally the heat-shrinkable laminated film of thickness 50µm was obtained.
Moreover, the obtained film was pulverized by pulverizer to make recycled pellet, then 50 parts by mass thereof to 100 parts by mass of the film was reproductively added to the middle layer (M layer), by conducting the same manner as above, a recycled heat-shrinkable laminated film was obtained. As the resin composition for the middle layer (M layer) at the time of addition of a reclamation material, to 100 parts by mass of styrene series resin composition constituting the middle layer, the resin composition constituting the surface layer (S layer) had 42 parts by mass and the resin composition constituting the adhesive layer (AD layer) had 4 parts by mass.
The evaluated results are shown in Table 4. In the table, an obtained film which had no problem to all the evaluation items was marked as ○, a film which had at least one problem to the items was marked as × in the comprehensive evaluation.

### (Example B-2)

As shown in Table 3, except for changing the content of PBT2 used for the surface layer (S layer) to 10 parts by mass, Example B-2 was conducted in the same manner as Example B-1; a heat-shrinkable laminated film and a recycled heat-shrinkable laminated film were obtained. The evaluation result of these obtained films is shown in Table 4.

### (Example B-3)

As shown in Table 3, except for changing AD1 used for the adhesive layer (AD layer) to styrene-isoprene copolymer ("Hybrar" produced by KURARAY CO., LTD., styrene content 20 mass %, Tg=-14°C, hereinafter, refer to "AD4".), Example B-3 was conducted in the same manner as Example B-1; a heat-shrinkable laminated film and a recycled heat-shrinkable laminated film were obtained. The evaluation results of these obtained films are shown in Table 4.

### (Example B-4)

As shown in Table 3, except for changing PBT2 used for the middle layer (M layer) into 30 parts by mass of copolymeric polybutylene terephthalate resin (hereinafter, refer to "PBT3".) having 90 mole % of terephthalic acid residue and 10 mole % of isophthalic acid residue as dicarboxylic acid residue together with 1,4-butanediol residue as diol residue, Example B-4 was conducted in the same manner as Example B-1; a heat-shrinkable laminated film and a recycled heat-shrinkable laminated film were obtained. The evaluation results of these obtained films are shown in Table 4.

### (Example B-5)

As shown in Table 3, except for changing PBT2 used for the middle layer (M layer) into 20 parts by mass of copolymeric polybutylene terephthalate resin (hereinafter, refer to "PBT3".) having 89 mole % of terephthalic acid residue and 11 mole % of isophthalic acid residue as dicarboxylic acid residue together with ethylene glycol residue as diol residue, Example B-5 was conducted in the same manner as Example B-1; a heat-shrinkable laminated film and a recycled heat-shrinkable laminated film were obtained. The evaluation results of these obtained films are shown in Table 4.

### (Example B-6)

As shown in Table 3, except for changing the content of PBT2 used for the surface layer (S layer) to 20 parts by mass of polytrimethylene terephthalate (hereinafter, refer to "PTT"), Example B-6 was conducted in the same manner as Example B-5; a heat-shrinkable laminated film and a recycled heat-shrinkable laminated film were obtained. The evaluation resuls of these obtained films are shown in Table 4.

### (Example B-7)

As shown in Table 3, in Example B-1, in order to form a heat resistant layer on the surface layer (S layer), aqueous solution of "ANSTECKS C200X" produced by TOHO Chemical Industry Co., LTD. (cationic surfactant, 50% concentration of the surfactant, hereinafter, refer to "SAA1".) was applied onto the pre-elongated sheet with use of kiss-system roll coater. Later, film elongation was carried out in the same manner as Example B-1, and the heat resistant layer containing 0.0006g/m² SAA1 on the surface layer (S layer) was provided. The evaluation results of obtained heat-shrinkable laminated film and the recycled heat-shrinkable laminated film are shown in Table 4.

### (Example B-8)

As shown in Table 3, except for changing the heat resistant layer to a heat resistant layer containing 0.006g/m² SAA1, Example B-8 was conducted in the same manner as Example B-7; a heat-shrinkable laminated film and a recycled heat-shrinkable laminated film were obtained. The evaluation results of these obtained films are shown in Table 4.

### (Example B-9)

As shown in Table 3, in Example 8-4, in order to form a heat resistant layer on the surface layer (S layer), SAA1 was applied onto the pre-elongated sheet with use of kiss-system roll coater. Later, film elongation was carried out in the same manner as Example B-4, and the heat resistant layer containing 0.015g/m² SAA1 on the surface layer (S layer) was provided. The evaluation results of obtained heat-shrinkable laminated film and the recycled heat-shrinkable laminated film are shown in Table 4.

### (Example B-10)

As shown in Table 3, in Example B-2, in order to form a heat resistant layer on the surface layer (S layer), aqueous solution of "ELECTROSTRIPPER AC" produced by KAO Corporation (cationic surfactant, 9.9% concentration of the surfactant, hereinafter, refer to "SAA2".) was applied onto the pre-elongated sheet with use of kiss-system roll coater. Later, film elongation was carried out in the same manner as Example B-2, and the heat resistant layer containing 0.015g/m² SAA2 on the surface layer (S layer) was provided. The evaluation results of obtained heat-shrinkable laminated film and the recycled heat-shrinkable laminated film are shown in Table 4.

### (Example B-11)

As shown in Table 3, in Example B-10, except for changing the heat resistant layer to a heat resistant layer containing 0.0045g/m² of SAA2, a heat resistant layer was formed in the same manner as Example B-10; a heat-shrinkable laminated film and a recycled heat-shrinkable laminated film were obtained. The evaluation results of these obtained films are shown in Table 4.

### (Comparative Example B-1)

As shown in Table 3, except for changing the mixed resin composition for the used of the surface layer (S layer) consisting of PET1 and PBT2 to a mixed resin composition having 100 parts by mass of PET1 and 30 parts by mass of PBT3, not having the adhesive layer (AD layer), and changing the composition of the middle layer (M layer) from the mixed resin composition of SBS1 and SBS2 to PET1 alone, further co-extruding from three layers two kinds dies was conducted so as to make the thickness of the laminated sheet become the surface layer (S layer) /the middle layer (M layer) /the surface layer (S layer)=100µm/75µm/100µm, Comparative Example B-1 was conducted in the same manner as Example B-1. Thus, a heat-shrinkable laminated film and a recycled heat-shrinkable laminated film were obtained. The evaluation results of these obtained films are shown in Table 4.

### (Reference Example 1)

As shown in Table 3, except for the resin composition used for the surface layer (S layer) consisting of PET1 and PBT2 to PET1 alone, Reference Example 1 was conducted in the same manner as Example B-1. Thus, a heat-shrinkable laminated film and a recycled heat-shrinkable laminated film were obtained. The evaluation results of these obtained films are shown in Table 4.

### (Reference Example 2)

As shown in Table 3, except for changing mass ratio of the mixed resin composition used for the surface layer (S layer) consisting of PET1 and PBT2 into 50 parts by mass of PBT2 to 100 parts by mass of PET1, Reference Example 2 was conducted in the same manner as Example B-1. Thus, a heat-shrinkable laminated film and a recycled heat-shrinkable laminated film were obtained. The evaluation results of these obtained films are shown in Table 4.

### (Comparative Example B-2)

As shown in Table 3, except for changing AD1 used for the adhesive layer (AD layer) to AD3, Comparative Example B-2 was conducted in the same manner as Example B-1. Thus, a heat-shrinkable laminated film and a recycled heat-shrinkable laminated film were obtained. The evaluation results of these obtained films are shown in Table 4.

[Table 3]

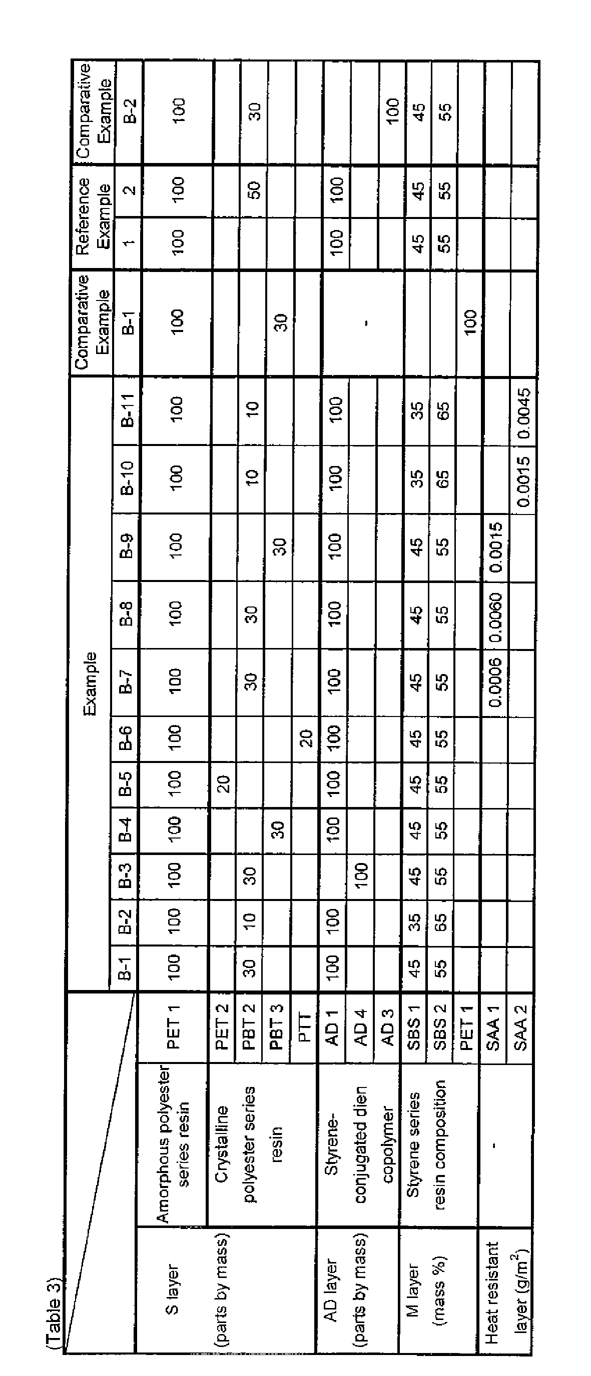

[Table 4]

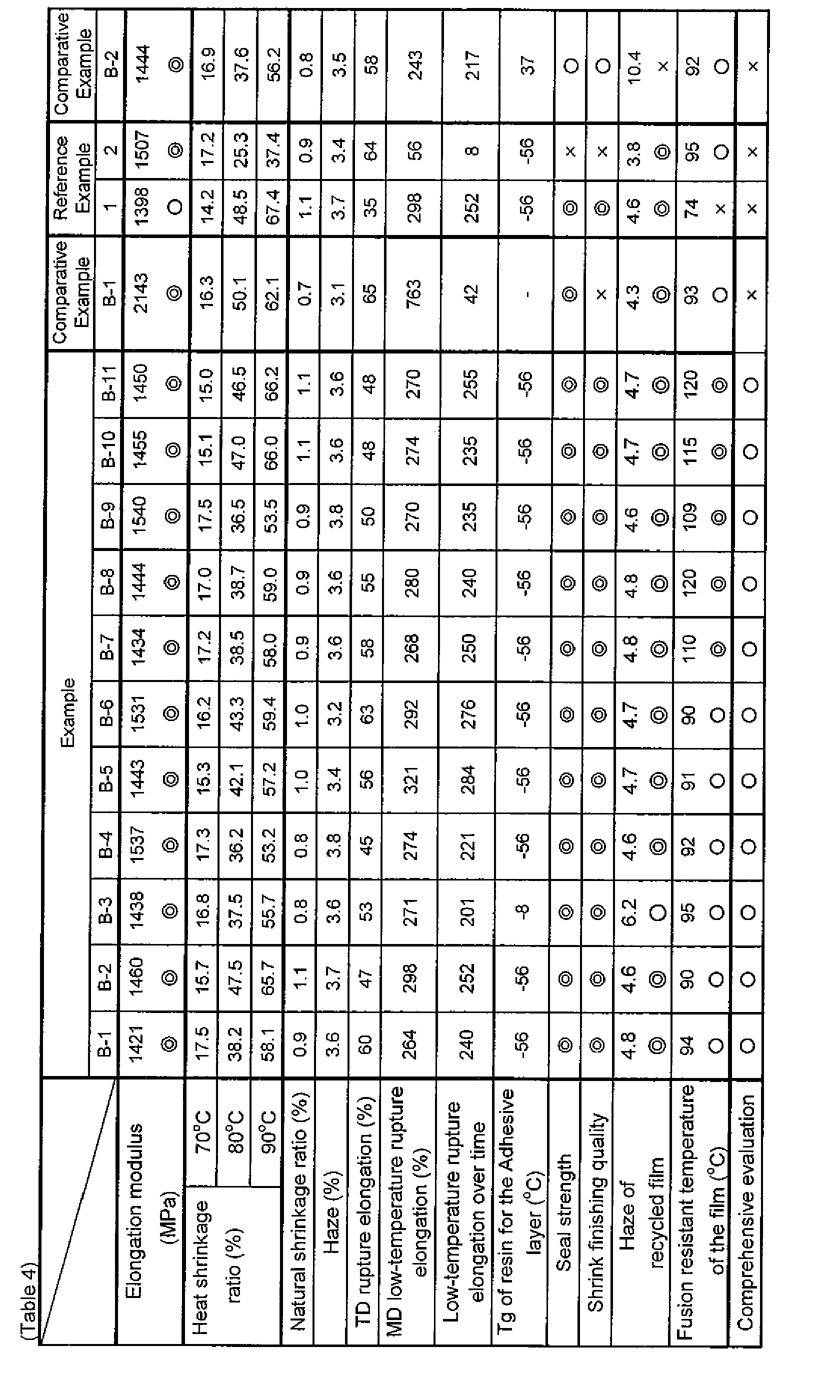

According to Tables 3 and 4, all the films of Examples B-1~B-6 constituted by layers made within the predetermined range of the invention were superior in shrink finishing quality, mechanical strength over time, TD rupture elongation, seal strength, and transparency of the recycled film to that of Comparative Examples B-1~B-2. Moreover, films of Examples B-7~B-11 of which surface layers were provided with heat resistant layers exhibited excellent heat resistance. On the other hand, the film of Comparative Example B-1 constituted by polyester resin composition alone had remarkable decline of shrink finishing quality and mechanical strength over time. In addition, the film of Reference Example 1 which did not contain crystalline polyester resin in the surface layer (S layer) slightly lacked of TD rupture elongation strength. Further, the film of Reference Example 2 contained more crystalline polyester resin in the surface layer (S layer) than that of the predetermined range of the invention had lack of shrunk property; thereby shrink finishing quality thereof was slightly inferior to the Examples of the invention. Furthermore, the films of Comparative Examples B-2 using resins other than the resin composition determined in the invention for the adhesive layer (AD layer) had remarkable deterioration in transparency.
Consequently, it is understood that a film of the invention exhibits excellent film rigidity, transparency at a time of recycling, and small natural shrinkage, with suppressed film interlayer peeling and shrinking stress, and is applicable to shrinkable packing, shrinkable bond-packing, shrinkable label and the like.

### Industrial Applicability

A film of the present invention exhibits excellent film rigidity, transparency of the recycled film, and small natural shrinkage, with suppressed film interlayer peeling and shrinking stress, and is applicable to shrinkable packing, shrinkable bond-packing, shrinkable label and the like. Therefore, it can be used for various molded products such as bottles (blown bottles), trays, lunch boxes, containers for food of delicatessen, containers for dairy products, especially it can be used as a heat-shrinkable label.

## Claims

1. A heat-shrinkable laminated film comprising: a surface layer (S layer); a middle layer (M layer) ; and an adhesive layer (AD layer),
wherein the respective layers are made of resin compositions composed mainly of the following components; an elongation modulus of the heat-shrinkable laminated film in a direction perpendicular to a film's main shrinking direction measured in accordance with JIS K7127 is 1200MPa or more; and maximum shrinking stress in the main shrinking direction of the heat-shrinkable laminated film being dipped in 90°C silicone oil for 10 seconds is 8MPa or less.
A surface layer (S layer) : a polyester series resin composition containing a polyvalent carboxylic acid residue and a polyvalent alcohol residue.
A middle layer (M layer): a styrene series resin composition.
An adhesive layer (AD layer): a resin composition containing a copolymer of styrene series hydrocarbon and a conjugated dienic hydrocarbon or hydrogenated derivatives thereof, and having a styrene series hydrocarbon content rate in the copolymer or hydrogenated derivatives thereof is 5 mass % or more and 40 mass % or less.

2. A heat-shrinkable laminated film comprising: a surface layer (S layer); a middle layer (M layer) ; and an adhesive layer (AD layer),
wherein the respective layers are made of resin compositions composed mainly of the following components; the heat-shrinkable laminated film is elongated at least twice or more and 7 times or less in one axial direction at 60°C or more and 120°C or less; an elongation modulus of the heat-shrinkable laminated film in a direction perpendicular to a film's main shrinking direction measured in accordance with JIS K7127 is 1200MPa or more; and maximum shrinking stress in the main shrinking direction of the heat-shrinkable laminated film being dipped in 90°C silicone oil for 10 seconds is 8MPa or less.
A surface layer (S layer) : a polyester series resin composition containing a polyvalent carboxylic acid residue and a polyvalent alcohol residue.
A middle layer (M layer): a styrene series resin composition.
An adhesive layer (AD layer): a resin composition containing a copolymer of styrene series hydrocarbon and a conjugated dienic hydrocarbon or hydrogenated derivatives thereof, and having a styrene series hydrocarbon content rate in the copolymer or hydrogenated derivatives thereof is 5 mass % or more and 40 mass % or less.

3. A heat-shrinkable laminated film according to claim 1 or 2, wherein maximum shrinking stress in the main shrinking direction of the laminated film being dipped in 90°C silicone oil for 10 seconds is 5MPa or more and 8MPa or less.

4. A heat-shrinkable laminated film according to any one of claims 1 to 3, wherein a polyester series resin composition constituting the surface layer (S layer) contains amorphous polyethylene terephthalate series resin as a main component which comprises aromatic dicarboxylic residue and diol residue, wherein the diol residue contains 15 mole % or more and 50 mole % or less of 1,4-cyclohexane dimethanol residue in total diol residue.

5. A heat-shrinkable laminated film according to claim 1 or 2, wherein the heat-shrinkable laminated film comprises: a surface layer (S layer) ; a middle layer (M layer) ; and an adhesive layer (AD layer),
the respective layers are resin compositions mainly containing following components; an elongation modulus of the heat-shrinkable laminated film in a direction perpendicular to a film's main shrinking direction measured in accordance with JIS K7127 is 1200MPa or more; and rupture elongation in the film' s main shrinking direction measured at 23°C in accordance with JIS K7127 is 40% or more. A surface layer (S layer): a resin composition consisting of an amorphous polyester series resin containing a polyvalent carboxylic acid residue and a polyvalent alcohol residue, and 1 part by mass or more and 40 parts by mass or less of crystalline polyester series resin to 100 parts by mass of the amorphous polyester series resin.
A middle layer (M layer) : a styrene series resin composition.
An adhesive layer (AD layer): a resin composition containing a copolymer of styrene series hydrocarbon and a conjugated dienic hydrocarbon or hydrogenated derivatives thereof, and having a styrene series hydrocarbon content rate in the copolymer or hydrogenated derivatives thereof is 5 mass % or more and 40 mass % or less.

6. A heat-shrinkable laminated film according to any one of claims 1 to 5, wherein the middle layer (M layer) contains 1 part by mass or more and 100 parts by mass or less of resin composition constituting the surface layer (S layer) to 100 parts by mass of resin composition composing the middle layer (M layer).

7. A heat-shrinkable laminated film according to any one of claims 1 to 6, wherein the middle layer (M layer) contains 1 part by mass or more and 30 parts by mass or less of resin composition constituting the adhesive layer (AD layer) to 100 parts by mass of resin composition composing the middle layer (M layer).

8. A heat-shrinkable laminated film according to any one of claims 5 to 7, wherein the amorphous polyester series resin constituting the surface layer (S layer) is amorphous polyethylene terephthalate which comprises aromatic dicarboxylic residue and diol residue, wherein the diol residue contains 15 mole % or more and 50 mole % or less of 1, 4-cyclohexane dimethanol residue in total diol residue.

9. A heat-shrinkable laminated film according to any one of claims 5 to 8, wherein the crystalline polyester series resin constituting the surface layer (S layer) is at least any one of resins selected from a group consisting of: polyethylene terephthalate resin, polypropylene terephthalate resin, polyebutylene terephthalate resin, polyethylene isophthalate resin, polyethylene naphthalate resin, polybutylene naphthalate resin, polyethylene terephthalate-isophthalate copolymer resin, polyethylene terephthalate-neopentyl terephthalate copolymer resin, polybutylene terephthalate-ether copolymer resin, polybutylene terephthalate-isophthalate copolymer resin, and polytrimethylene terephthalate.

10. A heat-shrinkable laminated film according to any one of claims 1 to 9, wherein styrene series resin composition constituting the middle layer (M layer) is selected from a group consisting of: a copolymer of styrene series hydrocarbon and a conjugated dienic hydrocarbon; a copolymer of the copolymer with a monomer copolymerable with the styrene series hydrocarbon or the conjugated dienic hydrocarbon; or mixtures thereof.

11. A heat-shrinkable laminated film according to any one of claims 1 to 10, wherein a glass transition temperature of copolymer of a styrene series hydrocarbon and a conjugated dienic hydrocarbon, or hydrogenated derivatives thereof, which constitutes the adhesive layer (AD layer), is 20°C or less.

12. A heat-shrinkable laminated film according to any one of claims 1 to 11, wherein haze measured in accordance with JIS K7105 is 10% or less.

13. A heat-shrinkable laminated film according to any one of claims 1 to 12, wherein a heat shrinking ratio in the main shrinking direction of the heat-shrinkable laminated film dipped in 70°C water for 10 seconds is 10% or more and 40% or less, and a heat shrinking ratio in the main shrinking direction of the heat-shrinkable laminated film dipped in 80°C water for 10 seconds is 30% or more and 70% or less.

14. A heat-shrinkable laminated film according to any one of claims 1 to 13, wherein thickness ratio of the surface layer (S layer) to total film thickness is 10% or more and 70% or less.

15. A heat-shrinkable laminated film according to any one of claims 1 to 14, wherein rupture elongation of the film at -5°C measured in accordance with JIS K7127 after 30 days storage at 30°C is 100% or more.

16. A molded product employing the heat-shrinkable laminated film as defined in any one of claims 1 to 15 as the base material.

17. A heat-shrinkable label employing the heat-shrinkable laminated film as defined in any one of claims 1 to 15 as the base material.

18. A container provided with the molded product as defined in claim 16 or the heat-shrinkable label as defined in claim 17.
